(19) Europäisches Patentamt
European Patent Office
Office européen des brevets

(11) Veröffentlichungsnummer: **0 141 996**
**B1**

(12) # EUROPÄISCHE PATENTSCHRIFT

(45) Veröffentlichungstag der Patentschrift: **25.11.87**

(51) Int. Cl.⁴: **C 09 B 62/503**, D 06 P 3/66, D 06 P 3/10

(21) Anmeldenummer: **84111706.2**

(22) Anmeldetag: **01.10.84**

(54) **Triphendioxazin-Reaktivfarbstoffe.**

(30) Priorität: **11.10.83 DE 3336844**
**07.12.83 DE 3344253**
**11.02.84 DE 3404855**

(43) Veröffentlichungstag der Anmeldung:
**22.05.85 Patentblatt 85/21**

(45) Bekanntmachung des Hinweises auf die Patenterteilung:
**25.11.87 Patentblatt 87/48**

(84) Benannte Vertragsstaaten:
**BE CH DE FR GB IT LI NL**

(56) Entgegenhaltungen:
**DE-A-2 503 611**
**DE-B-1 292 272**
**FR-A-1 416 127**
**FR-A-2 360 643**
**FR-A-2 397 443**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**

**EP 0 141 996 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft neue, reaktivgruppenhaltige Triphendioxazinfarbstoffe der allgemeinen Formel

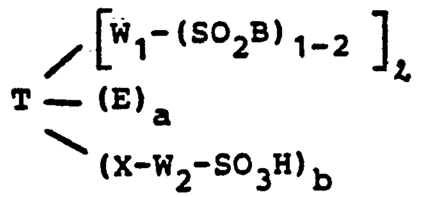

(1)

worin

T =

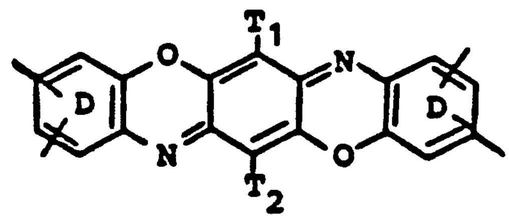

(1a)

oder

T =

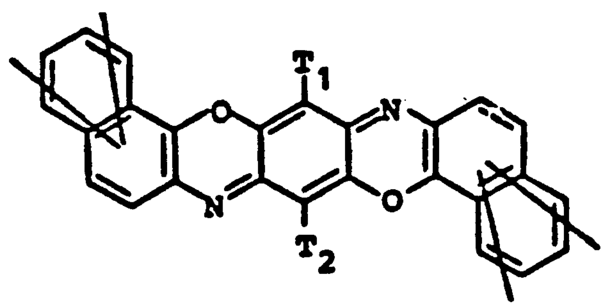

(1b)

wobei

$T_1$, $T_2$ = H, Cl, Br, F, $C_1$-$C_4$-Alkoxy, $C_1$-$C_4$-Alkyl, gegebenenfalls substituiertes Phenyl oder Phenoxy, vorzugsweise Cl,

und worin

die Benzolringe D und die Naphthalinringe noch weiter substituiert sein können,

und worin

B = $CH{=}CH_2$ oder $CH_2CH_2Z$

worin

Z = abspaltbare Gruppe wie $OSO_3H$, Cl, $S_2O_3H$, $OC(=O)CH_3$, $OPO_3H_2$, $-\overset{\oplus}{N}(CH_3)_3$, bevorzugt $OSO_3H$,

E = $SO_3H$, COOH oder gegebenenfalls substituierte Sulfonamidgruppe

$W_1$ = direkte Bindung oder von heterocyclischen Gruppen freies Brückenglied zu einem aromatischcarbocyclischen C-Atom in T, wobei $SO_2B$ an ein C-Atom in $W_1$ oder im Falle $W_1$ = direkte Bindung an ein aromatisch-carbocyclisches C-Atom in T gebunden ist,

X = O, NR oder S,

wobei

R = H oder gegebenenfalls substituiertes $C_1$-$C_4$-Alkyl,

$W_2$ = aliphatisches, araliphatisches oder aromatisch-carbocyclisches Brückenglied,

a = 0 bis 2,

b = 0 bis 2, wobei a + b = 0 oder 2 ist, wobei für

a + b = 0, $W_1$ nicht für eine direkte Bindung steht und mindestens eine wasserlöslich machende anionische Gruppe, insbesondere eine Sulfogruppe aufweist oder 2 $SO_2B$-Gruppen an $W_1$ gebunden sind und worin für den Fall, daß E = $SO_3H$ und a = 2 ist, $W_1$ für $W_3$ steht, wobei

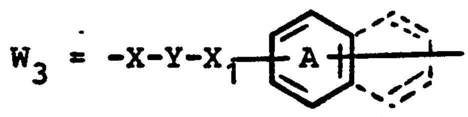

worin X die angegebene Bedeutung hat, Y = direkte Bindung, gegebenenfalls substiuiertes und/oder gegebenenfalls durch Heteroatome unterbrochenes $C_1$-$C_6$-Alkylen, $X_1$ = direkte Bindung, O oder NR, vorzugsweise NH und der Benzol- bzw. Naphthalinkern A substituiert sein kann, oder -X-$Y_1$- (1d) ist, worin X die oben angegebene Bedeutung hat und $Y_1$ = gegebenenfalls durch Heteroatome unterbrochenes $C_2$-$C_6$ -Alkylen.

Geeignete Reste $W_1$ sind neben den für $W_3$ genannten beispielsweise die folgenden: -X-Aralkylen- (1f) worin X die oben angegebene Bedeutung besitzt und Aralkylen für gegebenenfalls weiter substituiertes $C_1$-$C_6$-Alkylenphenylen, Phenylen-$C_1$-$C_6$-Alkylen, $C_1$-$C_6$-Alkylen-naphthylen oder Naphthylen-$C_1$-$C_6$-alkylen steht, oder

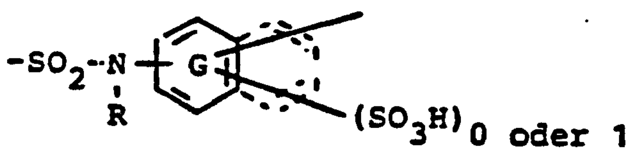

(1g)

oder

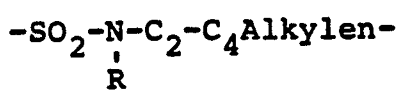

worin R die angegebene Bedeutung hat und der Benzol- bzw. Naphthalinkern G substituiert sein kann.

Bevorzugte Reste $W_3$ sind Reste

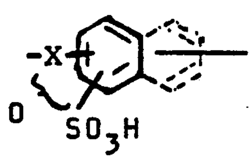

Der gegebenenfalls substituierte Sulfonamidrest E in Formel (1) enthält bevorzugt wasserlöslich machende Gruppen wie $SO_3H$, COOH.

Insbesondere steht E für folgende Gruppierungen $E_1$:

a) Rest der Formel

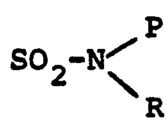

wobei P = $C_2$-$C_6$-Alkylen$(O)_{0 \text{ oder } 1}$-$SO_3H$ und R die angegebene Bedeutung hat.

b) Rest der Formel $SO_2$-NH-$SO_2R_1$

wobei $R_1$ für gegebenenfalls substituiertes Alkyl (vorzugsweise für $CH_3$) oder für gegebenenfalls substituiertes Aryl (insbesondere Phenyl) steht,

c) Rest der Formel

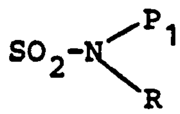

wobei $P_1$ = aromatischer Rest mit mindestens einer $SO_3H$-Gruppe, bevorzugt ein Phenylrest mit 1 bis 2 $SO_3H$-Gruppen.

Beispiele für gegebenenfalls substituiertes R sind: $CH_3$, $C_2H_5$, n-$C_3H_7$, n-$C_4H_9$, die durch OH, $OCH_3$, COOH und $SO_3H$ substituiert sein können.

Substituenten der gegebenenfalls substituierten Phenyl- und Phenoxyreste $T_1$ bzw. $T_2$ sind z. B.: Cl, $CH_3$, $C_2H_5$, $OCH_3$, $OC_2H_5$.

Beispiele für Substituenten der Benzolringe D und der Naphthalinringe der Formel (1a) bzw. (1b) sind:
Cl, Br, $CH_3$, $C_2H_5$, $CH_3O$, $C_2H_5O$, COOH.

Beispiele für Substituenten der Benzol- bzw, Naphthalinringe A bzw. G sind:
Cl, Br, $CH_3$, $OCH_3$, COOH, $SO_3H$, $SO_2NHCH_3$, $SO_2NH_2$, $OC_2H_5$, $C_2H_5$.

Bevorzugt steht in Formel (1a) der Substituent -$W_1$-$(SO_2B)_{1\text{-}2}$ in o-Stellung zu einem der beiden Substituenten E oder -X-$W_2$-$SO_3H$.

Bevozugte Farbstoffe (1) sind solche der Formeln (2) bis (5b):

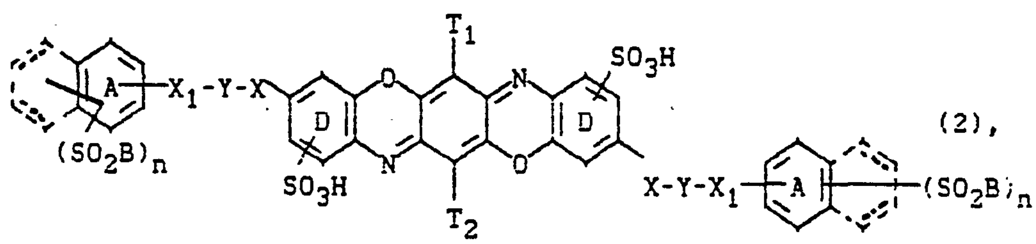

(2),

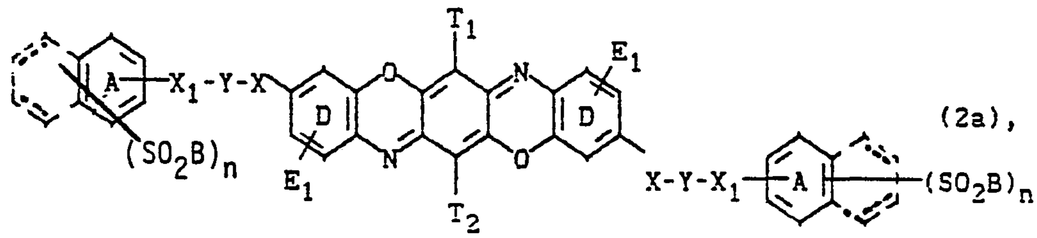

(2a),

worin X, Y, $X_1$, $T_1$, $T_2$, A, B und $E_1$ die angegebene Bedeutung, haben und worin die Sulfogruppe in Formel (2) bzw. der Rest $E_1$ in Formel (2a) in o-Stellung zum Substituenten

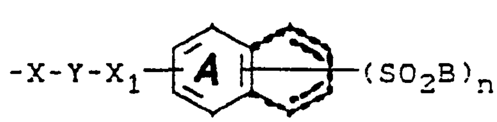

steht und worin

der Kern D durch Cl, $CH_3$, $OCH_3$, COOH substituiert sein kann und n = 1 oder 2;

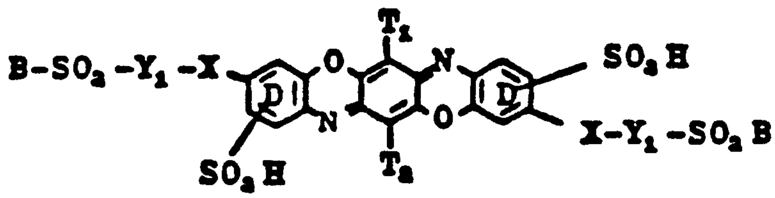

(3),

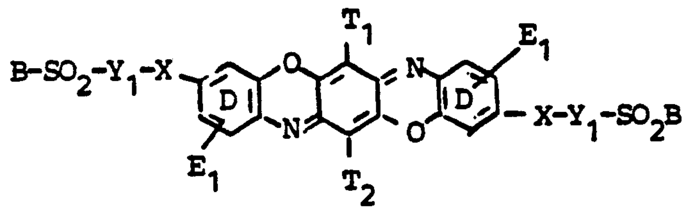

(3a),

worin X, B, $T_1$, $T_2$, D und $E_1$ die angegebene Bedeutung haben und
$Y_1$ = gegebenenfalls durch Heteroatome unterbrochenes $C_2$-$C_6$-Alkylen und worin die Sulfogruppe in Formel (3) bzw. der Rest $E_1$ in Formel (3a) in o-Stellung zum Stubstituenten -X-$Y_1$-$SO_2B$ steht;

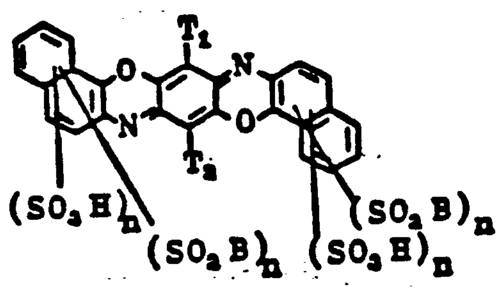

(4),

worin n, B, $T_1$ und $T_2$ die angegebene Bedeutung haben;

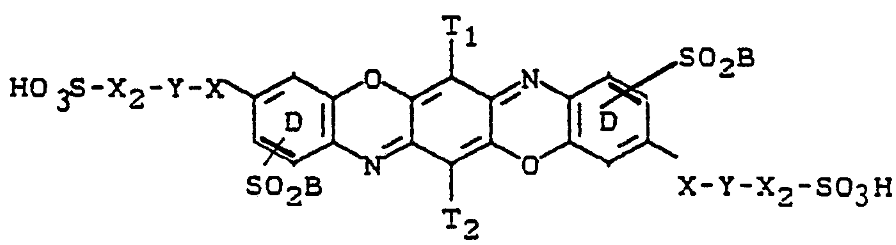

(5)

worin
$X_2$ = direkte Bindung oder ein beispielsweise durch $SO_3H$, Cl, $OCH_3$, $CH_3$, $C_2H_5$, COOH, $NH_2$ substituierter Arylenrest (vorzugsweise Phenylen) oder ein araliphatischer Rest,
die $SO_2B$-Gruppe in o-Stellung zum Substituenten -X-Y-$X_2$-$SO_3H$ steht
und X, Y, B, $T_1$ und $T_2$ und D die angegebene Bedeutung haben

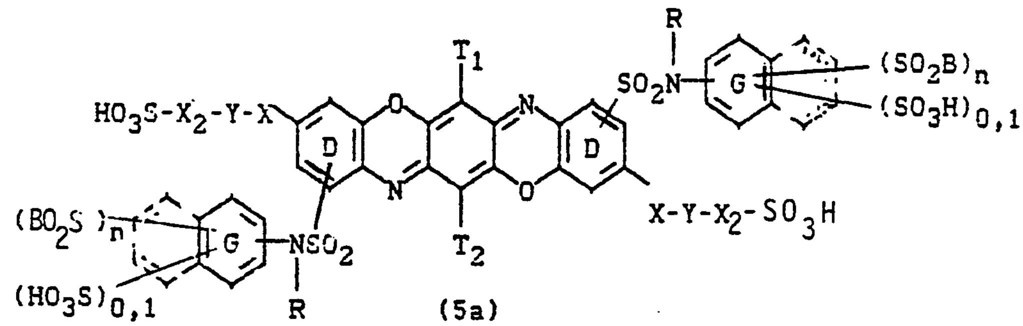

(5a)

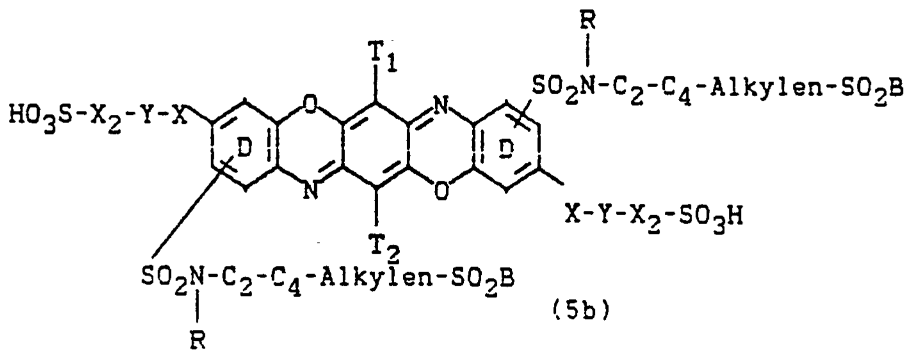

(5b)

worin n, B, $T_1$, $T_2$, X, Y, $X_2$, D und G die angegebene Bedeutung haben und worin der Rest

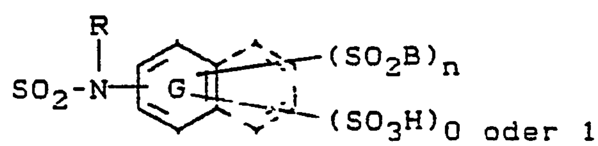

in Formel (5a) bzw. der Rest

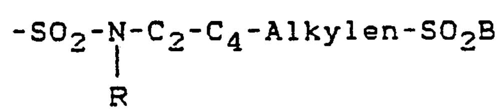

in Formel (5b) in o-Stellung zum Substituenten $-X-Y-X_2-SO_3H$ steht.

Geeignete araliphatiche Reste sind beispielsweise Phenylalkylenreste deren Alkylenkette durch Heteroatome oder Heteroatome enthaltende Gruppen unterbrochen sein können, wie

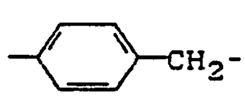 , 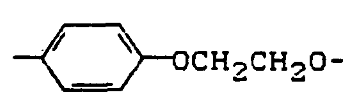 .

Als Substituenten für Y = $C_1$-$C_6$-Alkylen sind bevorzugt COOH, $SO_3H$, Halogen, gegebenenfalls durch $SO_3H$ substituiertes Phenyl. Unterbrechende Heteroatome sind vorzugsweise O, S und N.

$-(CH_2)_{2-6}-$ , $-CH_2-CH-CH_3$ , $-CH_2-CH-C_2H_5$ ,

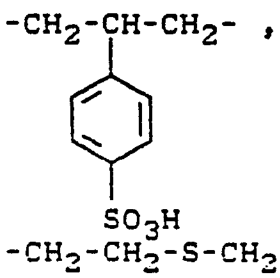 , $-CH(COOH)-(CH_2)_4-$ , $-CH_2-CH_2-O-CH_2-CH_2-$

$-CH_2-CH_2-S-CH_2-CH_2-$ , $-CH_2-CH_2-N(COCH_3)-CH_2-CH_2-$

Gegenstand der Erfindung sind auch Farbstoffe der Formel

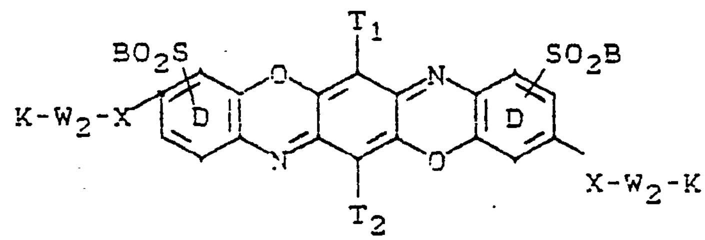 (5c)

worin X, $W_2$, $T_1$, $T_2$ und B die oben angegebene Bedeutung haben und

K = COOH,

$-SO_2NH-SO_2R_1$, worin $R_1$ die obengenannte Bedeutung hat und worin die Gruppe $-SO_2B$ in o-Stellung zur Gruppe $-X-W_2-K$ steht.

Bei den Formeln (1) bis (5c) haben folgende Gruppierungen eine bevorzugte Bedeutung;

| | |
|---|---|
| (1), (2) bis (5): | $B=CH_2CH_2OSO_3H$ |
| (2) bis (5c): | $T_1, T_2=Cl$ |
| (2 bis (3a), | |
| (5) bis (5): | X = NH, D ist unsubstituiert |
| (2) und (2a): | $X_1$ = direkte Bindung |
| | Y = direkte Bindung oder $-CH_2-$, $-CH_2-CH_2-$ der Rest |

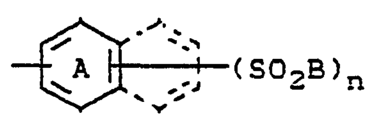

steht vorzugsweise für:

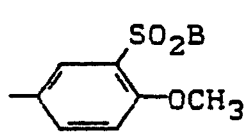 , 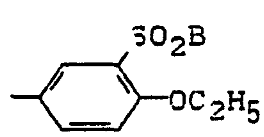

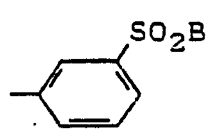 , 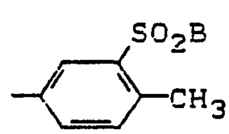

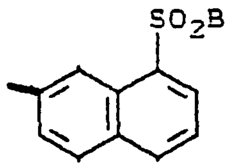

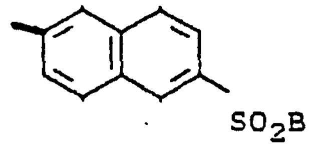

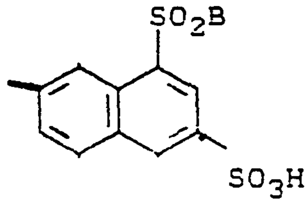

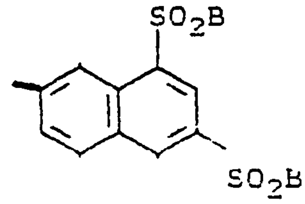

(3), (3a): $Y_1 = -CH_2-CH_2-$

(5), (5a), (5b): X2 = direkte Bindung und

$Y = -CH_2-CH_2-$ oder

Y = direkte Bindung und

$X_2$ = 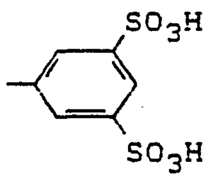 , 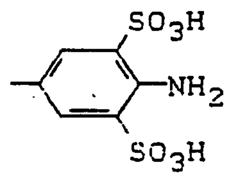

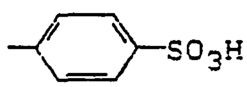 , 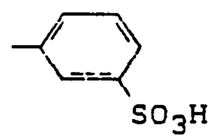

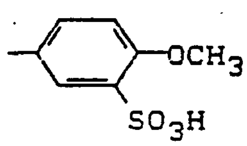

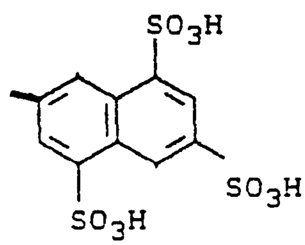

Gegenstand der Erfindung sind weiterhin Verfahen zur Herstellung der Farbstoffe der Formeln (2), (2a), (3), (3a), (4), (5), (5a) und (5b), das dadurch gekennzeichnet ist, daß man die Diarylide der Formeln

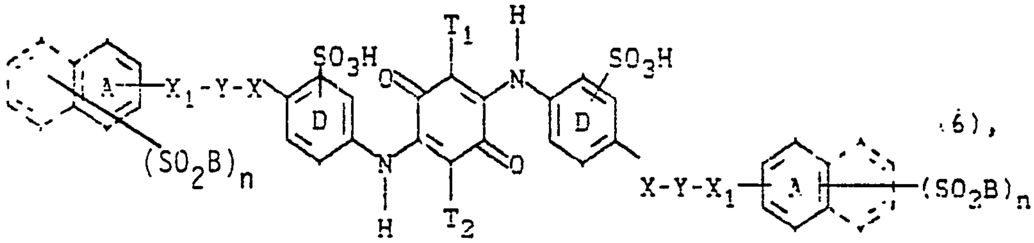

(6),

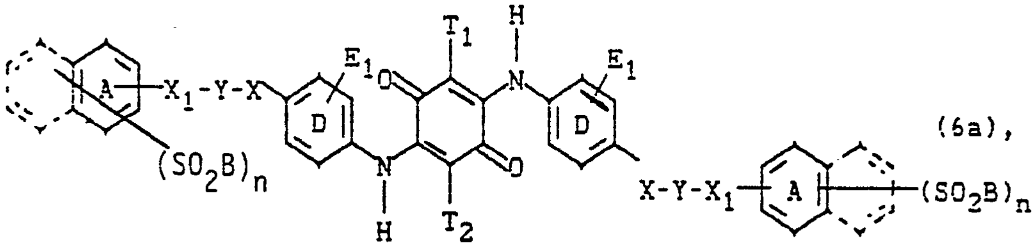

(6a),

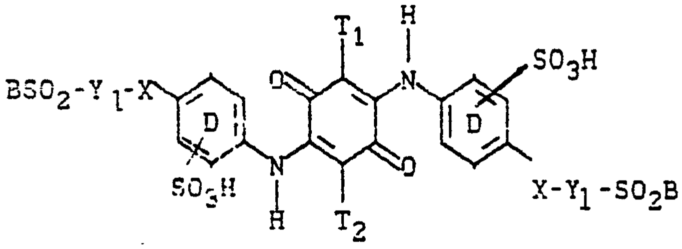

(7)

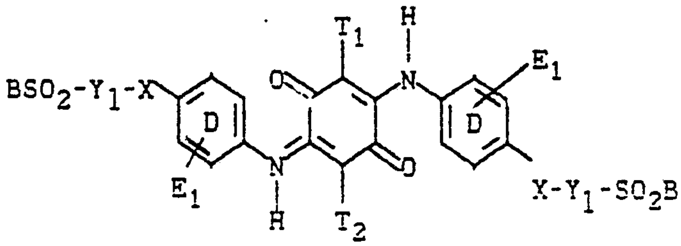

(7a)

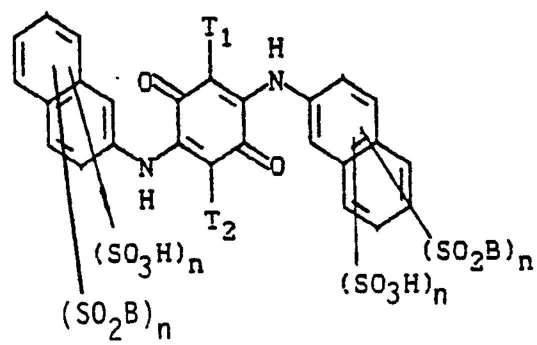

(8)

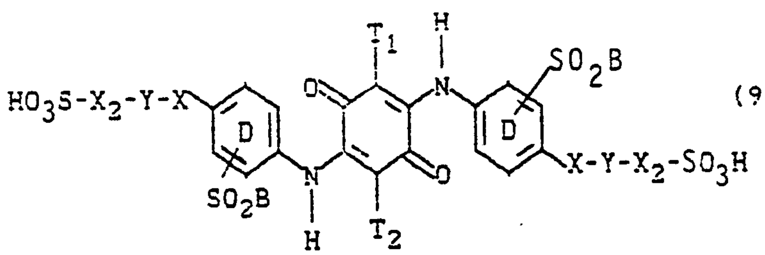

(9)

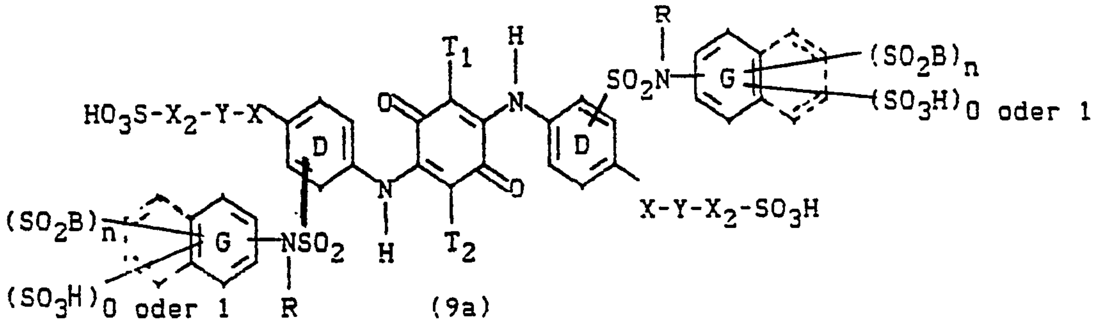

(9a)

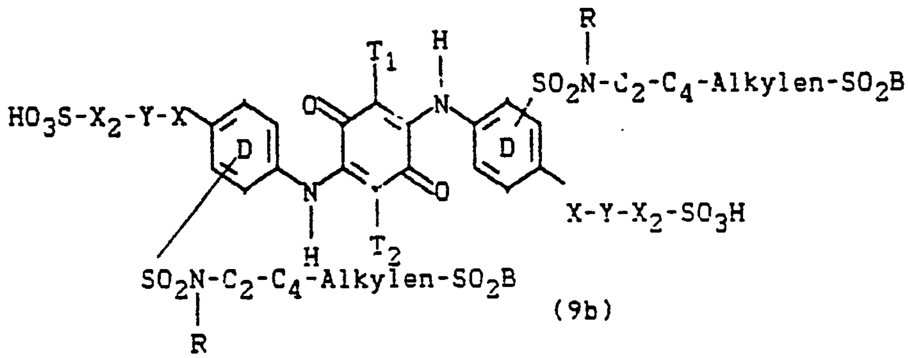

(9b)

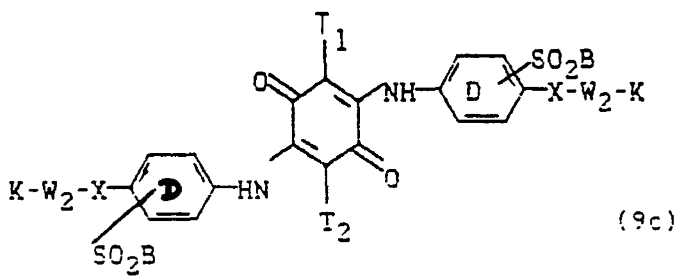

(9c)

mit einem sauren Kondensationsmittel behandelt, das unter Wasserstoffabspaltung den Ringschluß zum Triphendioxazinsystem bewirkt. Als saures Kondensationsmittel verwendet man 10 bis 50 %iges Oleum. Die Reaktionstemperatur liegt bei 0 bis 80°C, vorzugsweise bei 20 bis 60°C. So kann man beispielsweise die Diarylide mit der 5 bis 10fachen Gewichtsmenge 30 - 50 %igen, vorzugsweise 35 - 40 %igem Oleum bei Temperaturen von 10 bis 50° C, vorzugsweise 20 bis 40° C, cyclisieren.

Die Diarylide lassen sich auch nach den Angaben der Britischen Patentschrift 1 589 915 cyclisieren, wobei in 5 bis 30 %igem Oleum bei 0 bis 60° C mit 1 - 3 Mol Persulfat pro Mol Diarylid gearbeitet wird.

Beispiele für Ringschlüsse mit Oleum findet man in der Deutschen Offenlegungsschrift 25 03 611.

Besonders bevorzugt ist die Herstellung der Verbindungen der Formeln (2) bis (5c), in denen B = $CH_2CH_2OSO_3$, wobei man als Ausgangsmaterial solche Verbindungen der Formeln (6) bis (9c) verwendet, in denen B = $CH_2CH_2OH$.

Dabei wird gleichzeitig mit dem Ringschluß in Oleum eine Sulfatierung der OH-Gruppe zum Schwefelsäureester bewirkt.

Unter den Bedingungen des Ringschlußes werden weitere aliphatische OS-Gruppen sulfatiert und es kann zu Sulfierungen aromatischer Ringe kommen.

Die Diarylide der Formeln (6) bis (9c) können nach bekannten Methoden hergestellt werden, wie sie z.B. in den Deutschen Offenlegungsschriften 2 302 382, 2 344 781, 2 503 611, 2 823 828 und in der Britischen Patentschrift 2 059 985 erwähnt sind. So kann man beispielsweise 1 Mol eines p-Benzochinons, insbesondere des 2,3,5,6-Tetrachlor-1,4-benzochinons mit 2 Mol einer Verbindung der Formel

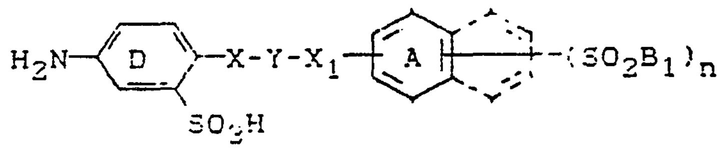

(10)

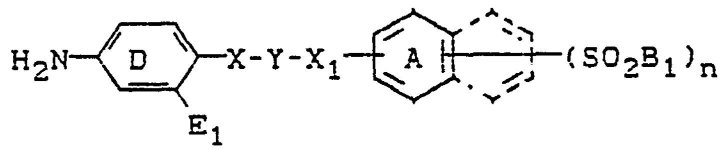

(10a)

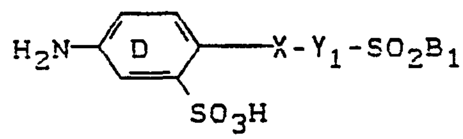

(11)

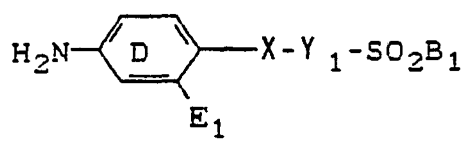

(11a)

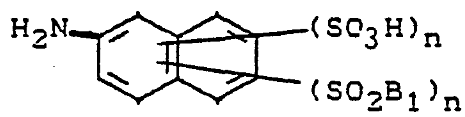

(12)

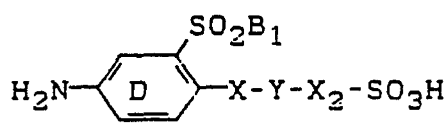

(13)

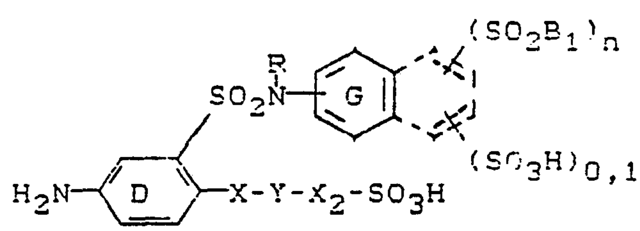

(13a)

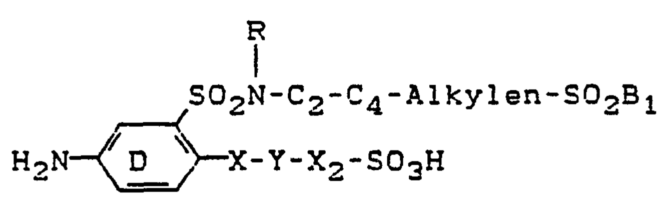

(13b)

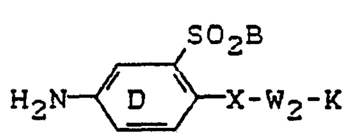

(13c)

worin $B_1$ = B oder $CH_2CH_2OH$
zu den Diaryliden der Formel (6) bis (9c) umsetzen.
Beispiele für Amine der Formel (10) bis (13c) sind folgende:

**Formel (10)**

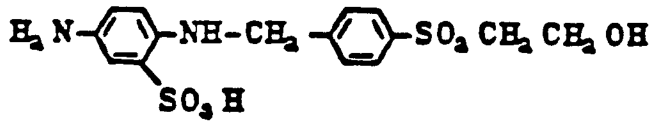

"

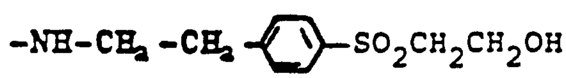

"

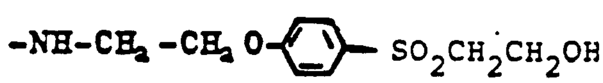

"

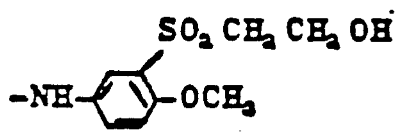

"

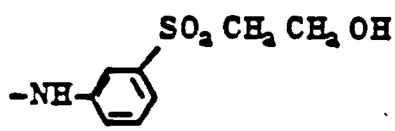

"

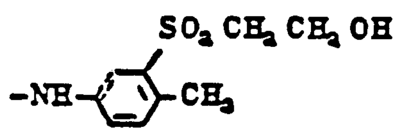

"

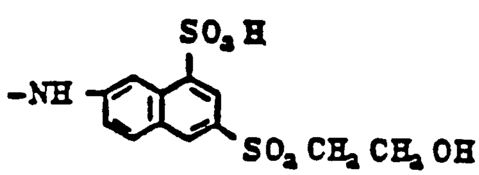

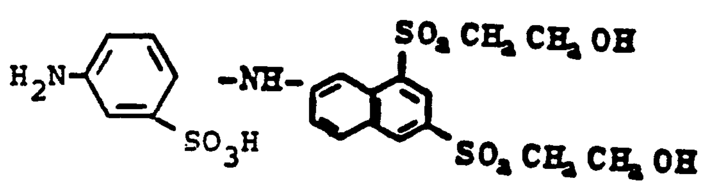

"

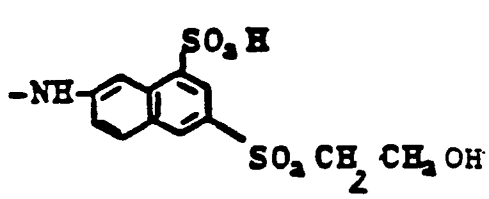

Formel (10a)

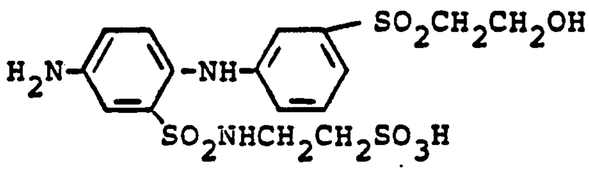

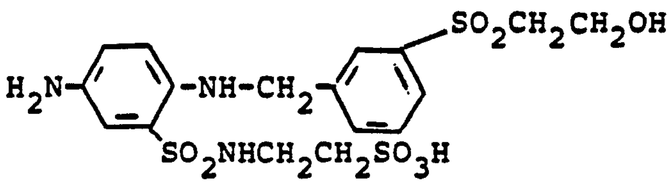

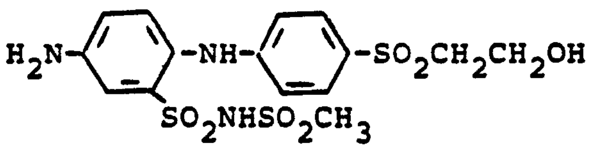

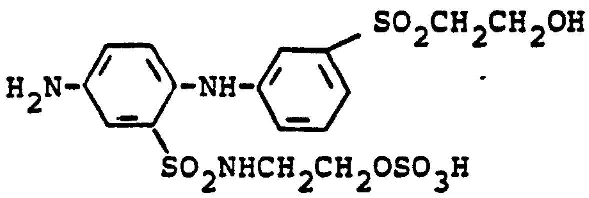

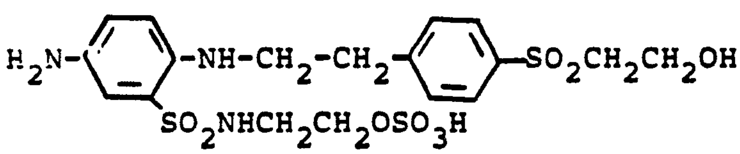

Formel (11)

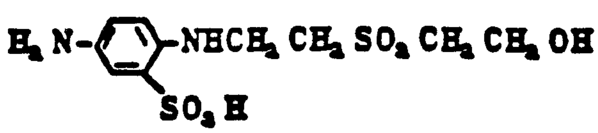

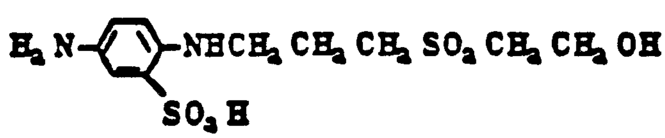

Formel (12)

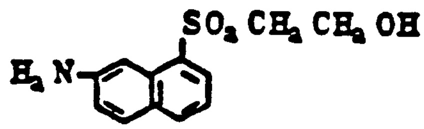

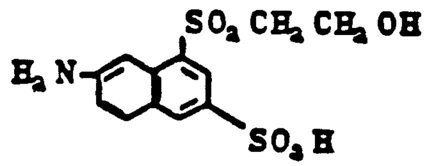

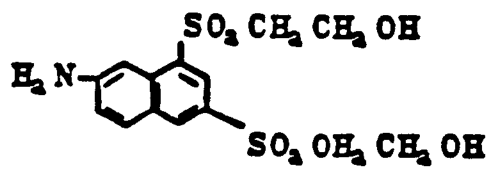

Formel (12a)

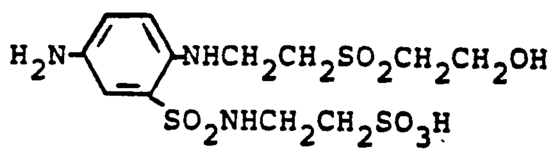

Formel (13)

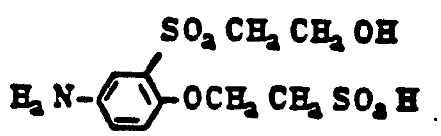

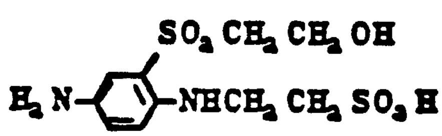

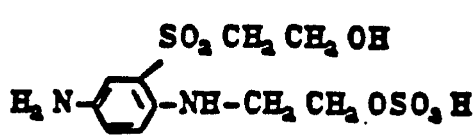

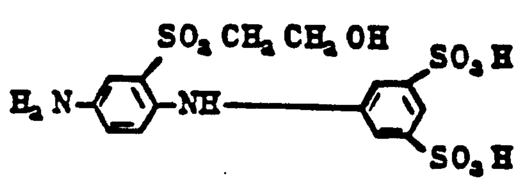

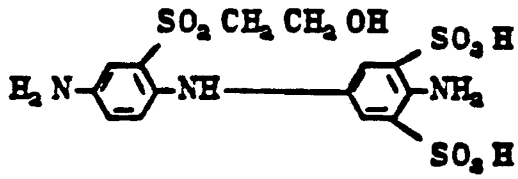

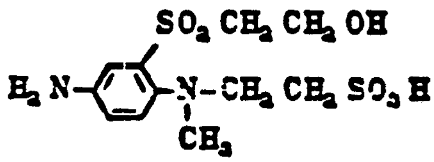

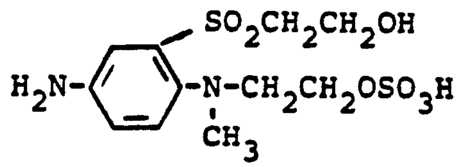

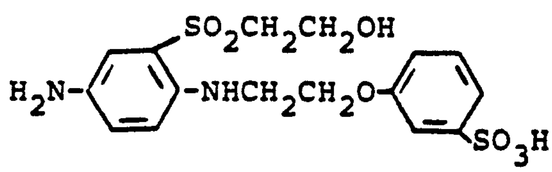

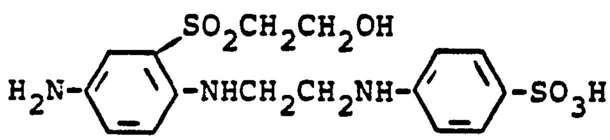

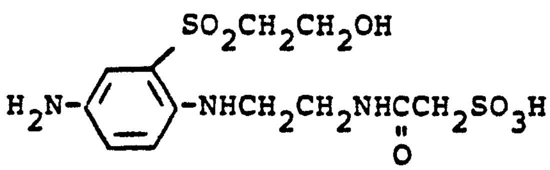

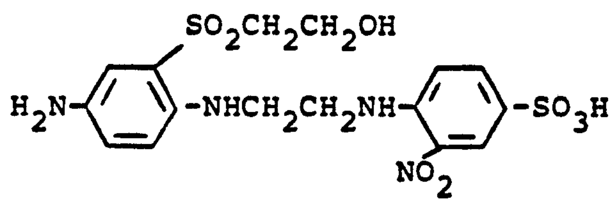

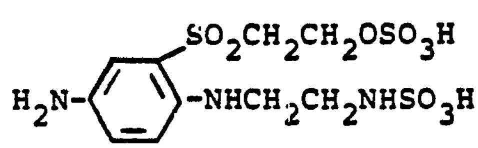

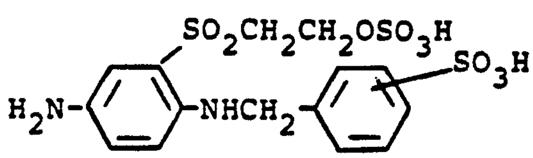

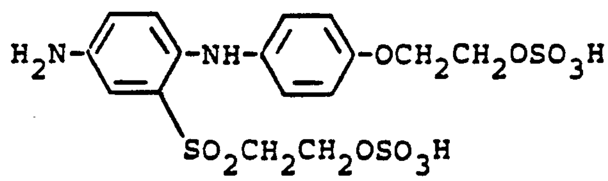

Formel (13a)

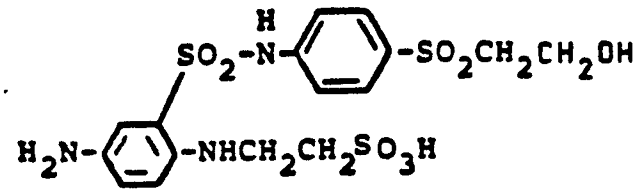

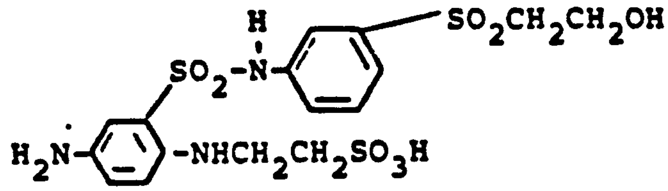

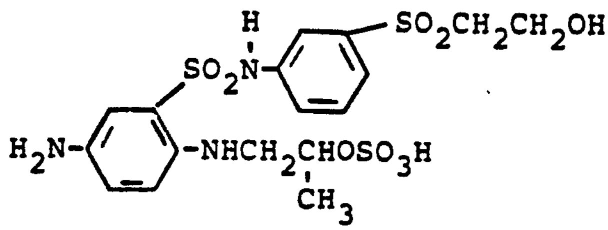

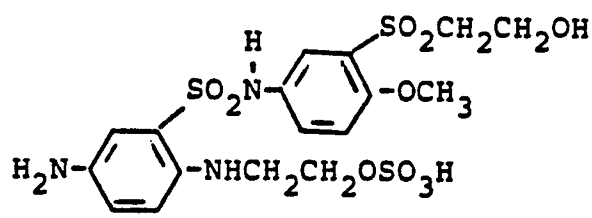

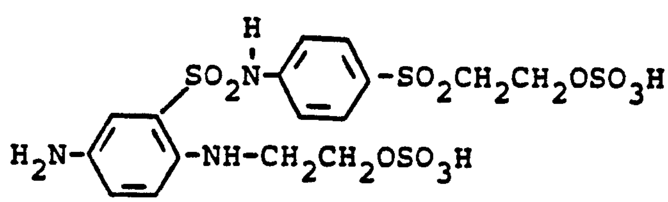

**Formel (13b)**

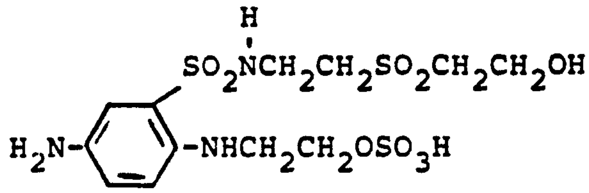

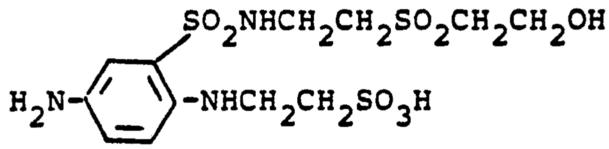

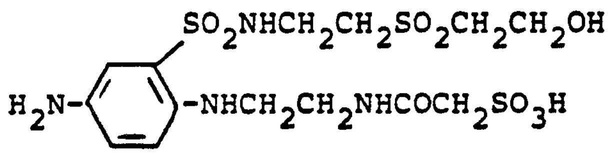

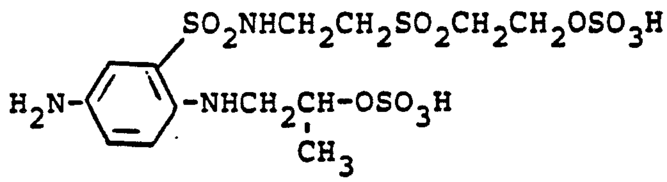

**Formel (13c)**

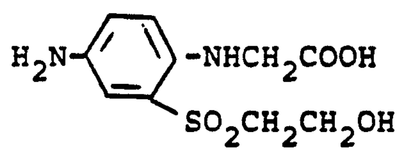

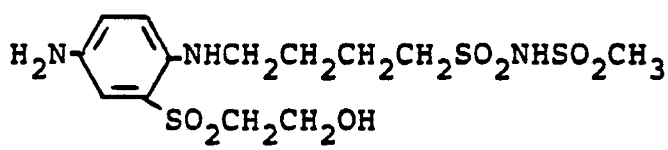

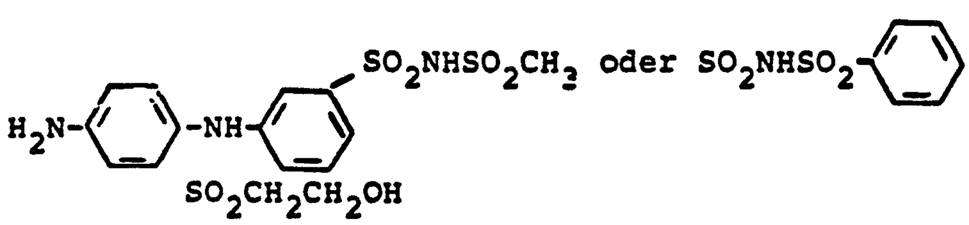
oder

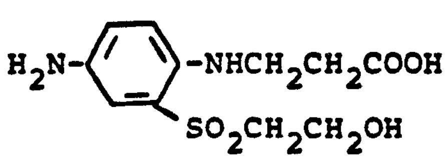

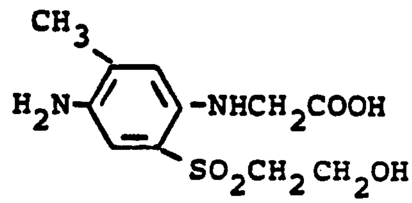

Für die Kondensation mit den Aminen der Formel (10) bis (13c) geeignete p-Benzochinone sind außer dem bereits erwähnten 2,3,5,6-Tetrachlorbenzochinon folgende (Reaktionen dieser Art sind ausführlich in der Deutschen Offenlegungsschrift 2 823 828 beschrieben):

1,4-Benzochinon,
2-Methyl-1,4-benzochinon,
2-Ethyl-1,4-benzochinon,
2-n-Propyl-1,4-benzochinon,
2-Isopropyl-1,4-benzochinon,
2,2'-Ethoxyethyl-1,4-benzochinon,
2-Phenyl-1,4-benzochinon,
2-(4'-Methylphenyl)-1,4-benzochinon,
2-(4'-Methoxyphenyl)-1,4-benzochinon,
2-(3'-Chlorophenyl)-1,4-benzochinon,
2-(4'-Nitrophenyl)-1,4-benzochinon,
2,5-Dimethyl-1,4-benzochinon,
2-Methyl-5-ethyl-1,4-benzochinon,
2-Methyl-3-chloro-1,4-benzochinon,
2-Methyl-6-chloro-1,4-benzochinon,
2-Methyl-3,5-dichloro-1,4-benzochinon,
2-Methyl-3,5,6-tribomo-1,4-benzochinon,
2-(4'-Methylphenoxy)-3,6-dibromo-1,4-benzochinon,
2-(3'-Methylphenoxy)-3,6-dibromo-1,4-benzochinon,
2-Methyl-3,5,6-trichloro-1,4-benzochinon,
2-Methyl-3-chloro-5-bromo-1,4-benzochinon,
2-Methyl-3,6-dichloro-1,4-benzochinon,
2-Methyl-3,6-dichloro-5-bromo-1,4-benzochinon,
2-Phenyl-3,6-dichloro-1,4-benzochinon,
2-(4'-Methoxyphenyl)-3,6-dichloro-1,4-benzochinon,
2-(4'-Chlorophenyl)-3,6-dichloro-1,4-benzochinon,
2-(4'-Nitrophenyl)-3,6-dichloro-1,4-benzochinon,
2-(4'-Nitrophenyl)-3,5,6-trichloro-1,4-benzochinon,
2,5-Dimethyl-3,6-dibromo-1,4-benzochinon,
2,5-Dimethyl-3-chloro-1,4-benzochinon,
2-Methyl-5-n-propyl-6-bromo-1,4-benzochinon,
2-Methyl-5-isopropyl-3-chloro-1,4-benzochinon,
2-Methyl-5-isopropyl-6-bromo-1,4-benzochinon und
2-(2'-Chlorophenyl)-3,5,6-tribromo-1,4-benzochinon,
2-Methyl-3-methoxy-1,4-benzochinon,
2,3,5,6-Tetramethoxy-1,4-benzochinon,
2,3,5,6-Tetraphenoxy-1,4-benzochinon,
2,3,5,6-Tetra-(4'-methylphenoxy)-1,4-benzochinon,
2,3,5,6-Tetra-(4'-methoxyphenoxy)-1,4-benzochinon,
2,3,5,6-Tetra-(4'-chlorophenoxy)-1,4-benzochinon,
2,3,5,6-Tetra-4-(3'-methyl-4'-chlorophenoxy)-1,4-benzochinon,
2-Ethyl-3,6-dimethoxy-1,4-benzochinon,
2-Chloro-3,6-dimethoxy-1,4-benzochinon,
2,3,5-Trimethoxy-1,4-benzochinon,
2,5-Dimethyl-3,6-dimethoxy-1,4-benzochinon,
2,5-Dimethyl-3,6-dimethoxy-1,4-benzochinon,
2-Methyl-3,6-dimethoxy-1,4-benzochinon,
2-Methyl-5,6-dimethoxy-1,4-benzochinon,
2-Ethyl-3,6-dimethoxy-1,4-benzochinon,
2-Chloro-3-n-propyl-5-methoxy-1,4-benzochinon,
2-Chloro-3,5-dimethoxy-1,4-benzochinon,
2,3,5,6-Tetrabrom-1,4-benzochinon.

Die neuen Farbstofe der Formel (1) eignen sich zum Färben und Bedrucken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe der erfindungsgemäßen Art bekanntgewordenen Verfahren erfolgt.

Die angegebenen Formeln sind die der entsprechenden freien Säuren. Die Farbstoffe wurden im allgemeinen in der Form der Alkalisalze, insbesondere der Na-Salze isoliert und zum Färben eingesetzt.

Die in den Beispielen genannten Gewichte beziehen sich auf die freie Säure. Die in den Beispielen angegebenen Farbkennzahlen beziehen sich auf Colour Index Hue-Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Stellung der Substituenten in den beiden äußeren aromatischen Ringen des Triphendioxazin-Systems der isomeren Reaktionsprodukte auf das unter Formel (2) bis (5c) Gesagte verwiesen wird.

**Beispiel 1**

0,05 Mol des Dianilides der Formel

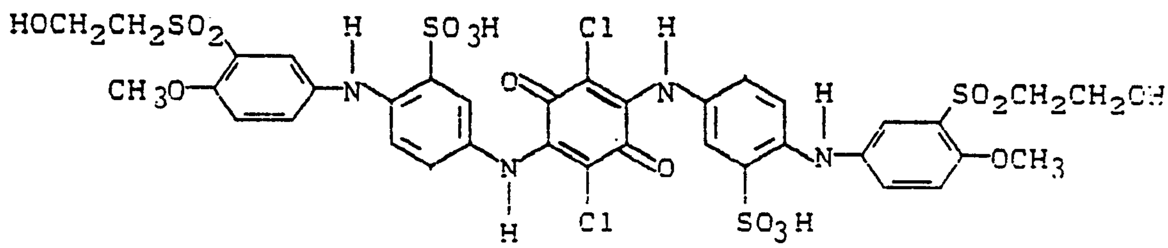

werden in 200 ml 25 %iges Oleum bei 25 bis 40°C eingetragen. Man erwärmt in 15 Minuten auf 60°C und rührt 1 Stunde bei dieser Temperatur. Nach dem Abkühlen auf Raumtemperatur trägt man auf 1 kg Eis aus und salzt den Farbstoff durch Zugabe von 10 Vol.-% Kochsalz aus. Nach dem Absaugen wird die Paste erneut in Wasser angerührt und mit Natriumhydrogencarbonat auf pH 5-6 gestellt. Nach dem Aussalzen, Absaugen, Trocknen im Vakuumtrockenschrank bei 60°C und Mahlen erhält man ein blaues Pulver, das Baumwolle in brillanten Blautönen färbt (Farbkennzahl 14).

Der Farbstoff entspricht der Formel

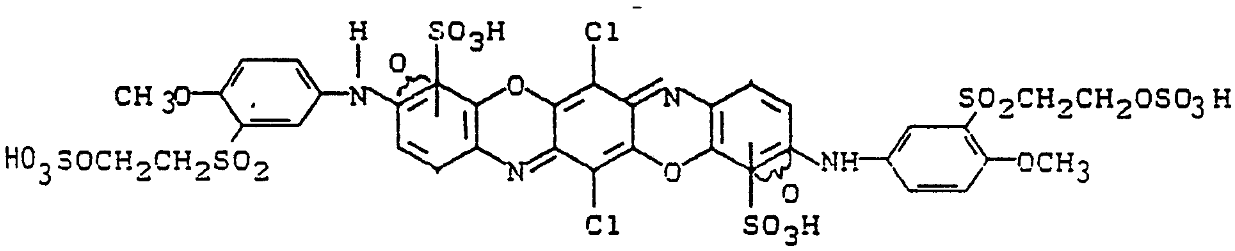

Nach den Angaben dieses Beispiels erhält man weitere wertvolle Farbstoffe, die Baumwolle in brillanten Blautönen färben, wenn man die folgenden Diarylide einsetzt:

Farbkennzahl

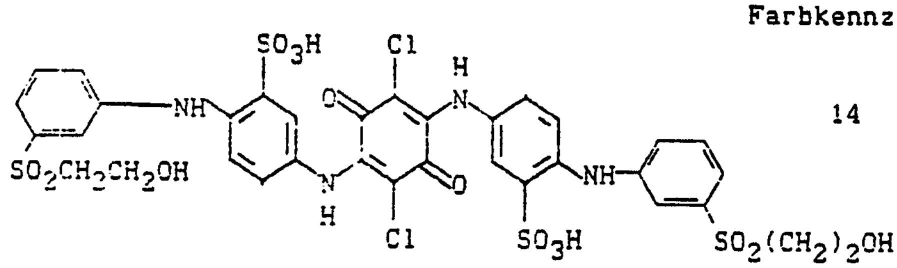

14

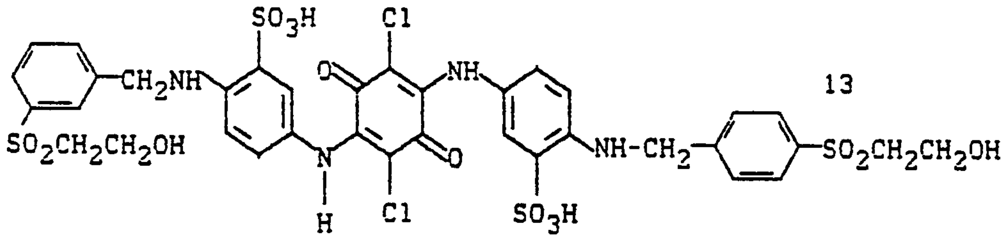

13

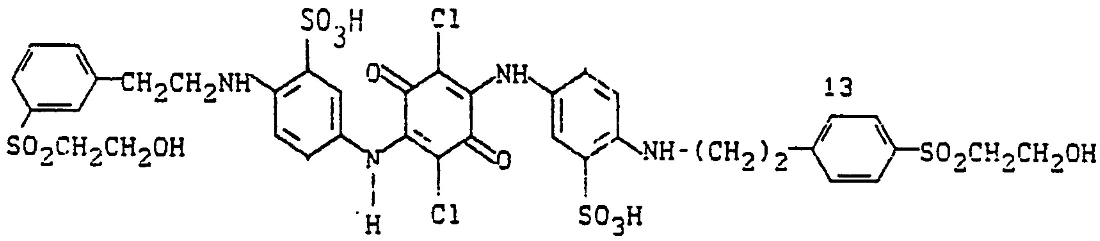

13

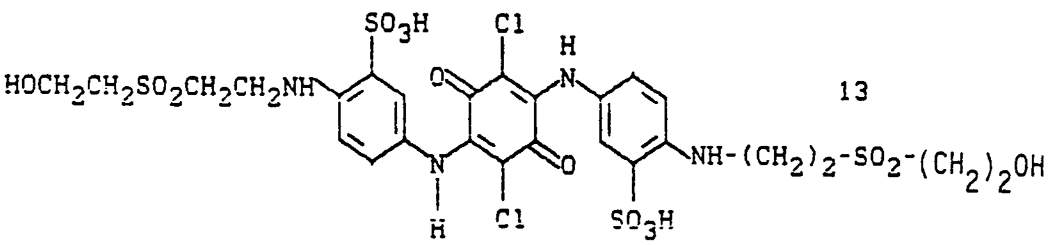

13

Farbkennzahl

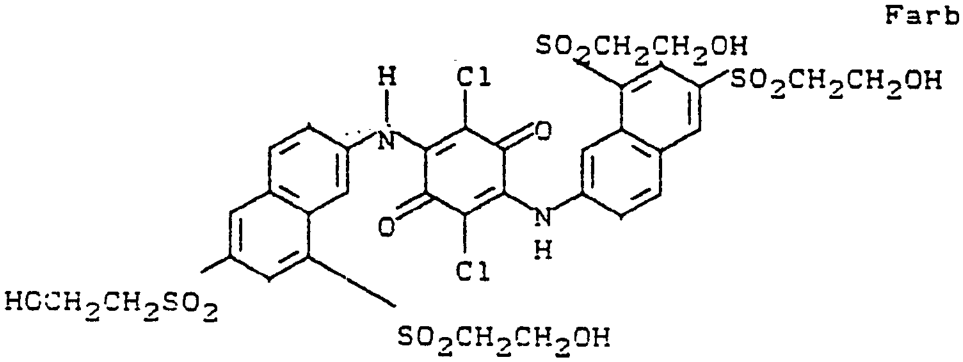

12

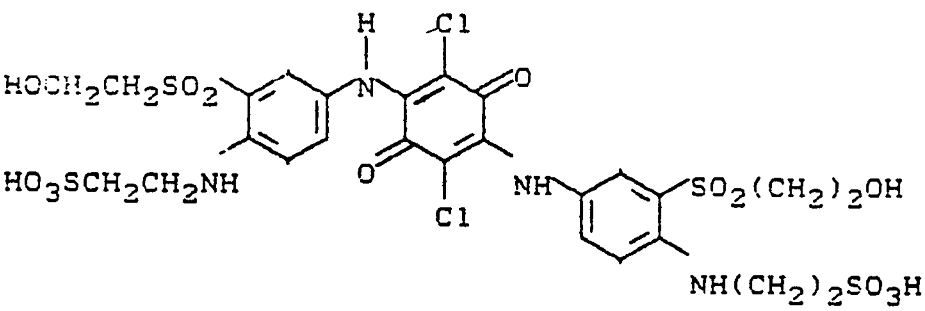

13

**Beispiel 2a**

41,05 g (0,05 Mol) des Dianilides der Formel

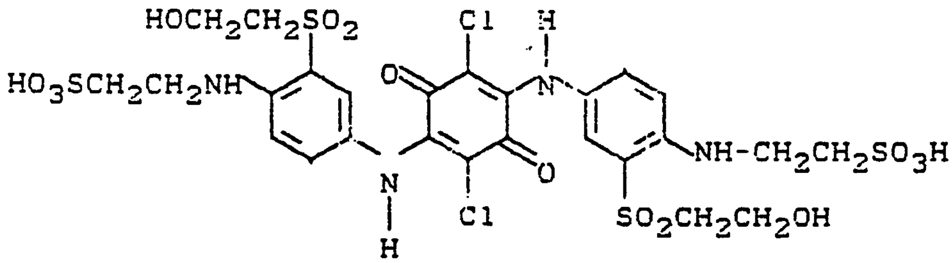

werden in 800 g 25 %iges Oleum bei 25 bis 40°C eingetragen. Man erwärmt in 15 Minuten auf 50 bis 60°C und rührt solange bis die Cyclisierung beendet ist (läßt sich im Dünnschichtchromatogramm verfolgen).

Nach dem Abkühlen auf Raumtemperatur trägt man auf 2 kg Eiswasser aus und setzt 10 Volumen % Natrium- oder Kaliumchlorid zu. Nach dem Absaugen wird die Paste in Eiswasser angerührt und mit Natriumhydrogencarbonat auf pH 5-6 gestellt. Nach dem Aussalzen, Absaugen, Trocknen im Vakuumtrockenschrank bei 60°C und Mahlen erhält man ein blaues Pulver, das Baumwolle in brillanten Blautönen (Farbkennzahl 13). Der Farbstoff entspricht der Formel

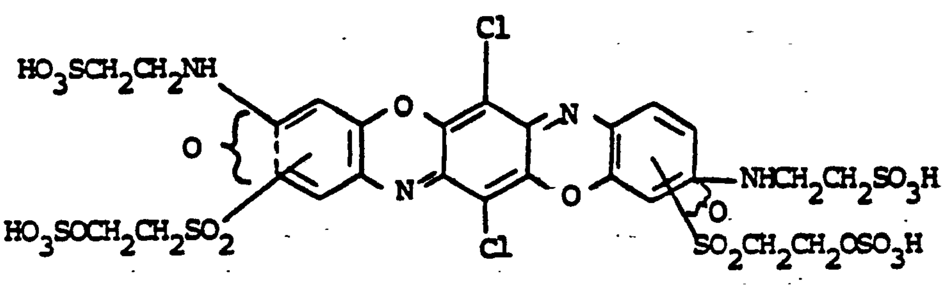

**Beispiel 2b**

41,05 g des Dianilides aus Beispiel 2a werden in 15 Minuten in 400 g 20 %iges Oleum unter Rühren bei 20 bis 25°C eingetragen. 22,8 g Ammoniumpersulfat werden dann in 7 gleichgroßen Portionen im Abstand von je einer Stunde bei 20 bis 30°C eingetragen. Man rührt noch 1 Stunde bei 20 bis 30°C nach. Das Reaktionsgemisch wird auf 1 kg Eiswasser ausgetragen und dann mit 10 Volumen % Natrium- oder Kaliumchlorid versetzt. Nach dem Absaugen wird die Paste in Eiswasser angerührt und mit Natriumhydrogencarbonat auf pH 5-6 gestellt. Nach dem Aussalzen, Absaugen, Trocknen im Vakuumtrockenschrank bei 60°C und Mahlen erhält man ein blaues Pulver, das Baumwolle gleichfalls in brillanten Blautönen färbt (Farbkennzahl 19). Der Farbstoff entspricht der bei Beispiel 2a angegebenen Formel.

**Beispiel 2c**

41,05 g des Dianilides aus Beispiel 2b werden mit 10 g Kieselgur innig vermischt und in 40 Minuten unter gutem Rühren bei 20 bis 30°C in ein Gemisch aus 80 ml 20 %igem und 60 ml 65 %igem Oleum eingetragen. Bei 20°C werden 1 g Kaliumjodid zugesetzt. Man rührt 45 Minuten bei 20°C bis 23°C und läßt dann die Schmelze in 1000 g Eis und 200 ml Wasser einlaufen, sodaß die Temperaturen nicht über 10° steigt. Man fügt dann 10 Volumen % Natrium- oder Kaliumchlorid zu. Man saugt den Niederschlag ab und trägt die Paste in Eiswasser ein. Durch Zugabe von Natriumhydrogencarbonat wird der pH auf 5-6 gestellt. Nach dem Aussalzen, Absaugen, Trocknen im Vakuumtrockenschrank bei 60° und Mahlen erhält man ein blaues Pulver, das Baumwolle gleichfalls in brillanten Blautönen färbt (Farbkennzahl 13).

Der Farbstoff entspricht der bei Beispiel 2a angegebenen Formel.

Farbstoffe mit Sulfonamidgruppen werden zweckmäßigerweise nach Verfahren 2b und 2c hergestellt.

Weitere wertvolle Farbstoffe erhält man nach den Angaben der Beispiele 2a, 2b oder 2c, wenn man die nachfolgend aufgeführten Dianilide einsetzt, wobei die Ausgangs- und Endprodukte durch die folgenden Formeln charakterisiert sind. (Beispiele für Farbstoffe der Unterformel 5, 5a, 5b und 5c, Tabelle 1).

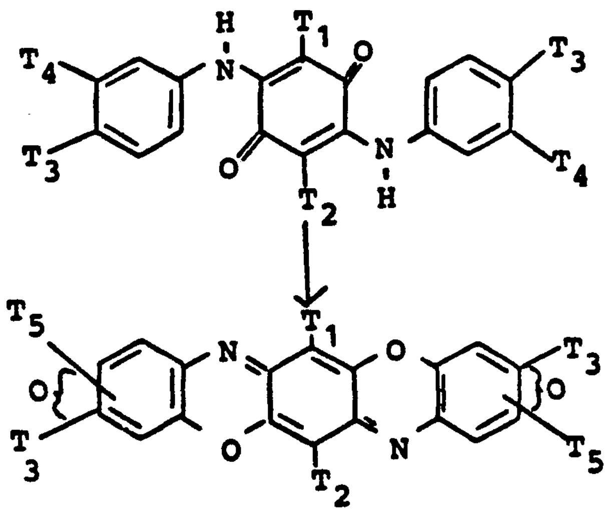

Farbkennzahl 13 = klares rotstichiges Blau
14 = klares Blau
9 = klares blaustichiges Rot
15 = klares grünstichiges Blau

Die Sulfogruppe in $T_3$ in den Beispielen 13, 28, 26 wird beim Ringschluß in Oleum eingeführt.

**Tabelle 1**

| Beispiel | $T_1$ | $T_2$ | $T_3$ | $T_4$ | $T_5$ | Farbkennzahl |
|---|---|---|---|---|---|---|
| 2 | Br | Br | $NHCH_2CH_2SO_3H$ | $SO_2CH_2CH_2OH$ | OH-Gruppe in $T_4 \rightarrow OSO_3H$ | 13 |
| 3 | $CH_3$ | $CH_3$ | " | " | " | 13 |
| 4 | Cl | Cl | $N(CH_3)CH_2CH_2SO_3H$ | " | " | 13 |
| 5 | " | " | $NH(CH_2)_4SO_3H$ | " | " | 13 |
| 6 | " | " | $OCH_2CH_2SO_3H$ | " | " | 9 |
| 7 | " | " | 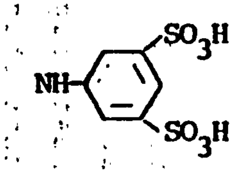 | " | " | 13 |
| 8 | " | " | 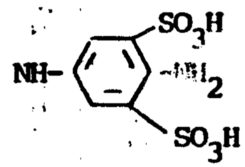 | " | " | 13 |
| 9 | " | " | 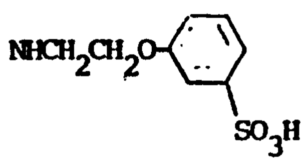 | " | " | 13 |
| 10 | " | " | 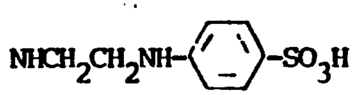 | " | " | 13 |
| | | | $NHCH_2CH_2NH-C(=O)CH_2SO_3H$ | " | " | 13 |

| Beispiel | $T_1$ | $T_2$ | $T_3$ | $T_4$ | $T_5$ | Farbkennzahl |
|---|---|---|---|---|---|---|
| 11 | Cl | Cl | 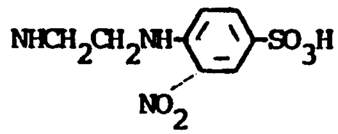 | $SO_2CH_2CH_2OH$ | OH-Gruppe in $T_4$ → Gruppe | 15 |
| 12 | " | " | 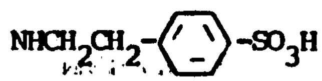 | " | " | 13 |
| 13 | " | " | 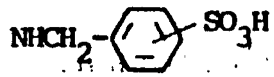 | " | " | 13 |
| 14 | " | " | $NHCH_2CH_2SO_3H$ | 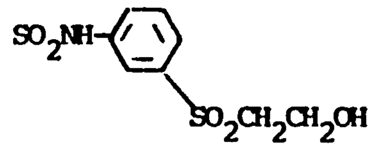 | " | 13 |
| 15 | " | " | " | 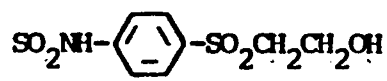 | " | 13 |
| 16 | " | " | " | 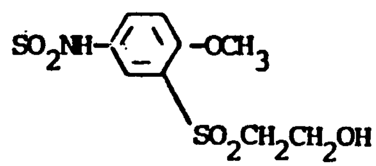 | " | 13 |
| 17 | " | " | " | 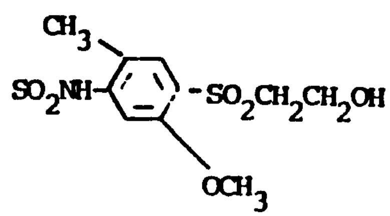 | " | 13 |

| Beispiel | $T_1$ | $T_2$ | $T_3$ | $T_4$ | $T_5$ | Farbkennzahl |
|---|---|---|---|---|---|---|
| 18 | Br | Br | $NHCH_2CH_2SO_3H$ | 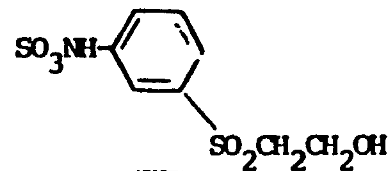 | OH-Gruppe in $T_4 \rightarrow OSO_3H$ | 13 |
| 19 | Cl | Cl | $NHCH_2CH_2OSO_3H$ | 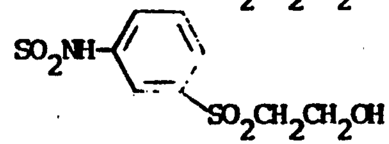 | " | 13 |
| 19a | " | " | $NHCH_2CH_2OH$ Sulfatierung durch Ringschluß im Oleum $NHCH_2CH_2OSO_3H$ | " | " | 13 |
| 20 | " | " | $NHCH_2CH_2OSO_3H$ | 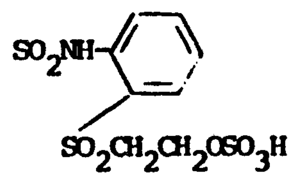 | $T_5 = T_4$ | 13 |

| Beispiel | $T_1$ | $T_2$ | $T_3$ | $T_4$ | $T_5$ | Farbkennzahl |
|---|---|---|---|---|---|---|
| 21 | Cl | Cl | $NHCH_2CH_2OSO_3H$ | 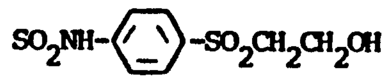 | OH-Gruppe in $T_4 \longrightarrow OSO_3H$ | 13 |
| | | | $NHCH_2CH_2OH$ ↓ Sulfatierung durch Ringschluß im Oleum $NHCH_2CH_2OSO_3H$ | " | " | |
| 22 | " | " | $NHCH_2CH_2OSO_3H$ | 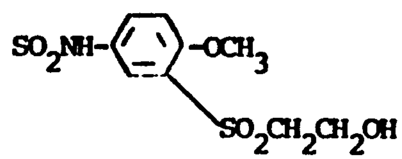 | " | 13 |
| 23 | " | " | $NHCH_2CH_2SO_3H$ | $SO_2NHCH_2CH_2SO_2CH_2CH_2OH$ | " | 13 |
| 24 | " | " | $NHCH_2CH_2OSO_3H$ | " | " | 13 |
| 25 | " | " | 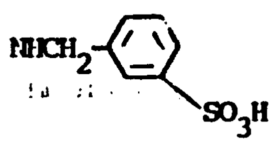 | 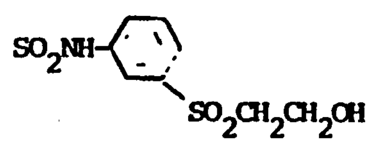 | " | 13 |

| Beispiel | $T_1$ | $T_2$ | $T_3$ | $T_4$ | $T_5$ | Farbkennzahl |
|---|---|---|---|---|---|---|
| 26 | Cl | Cl | 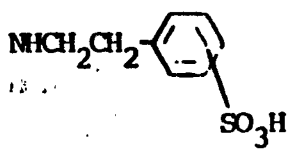 | 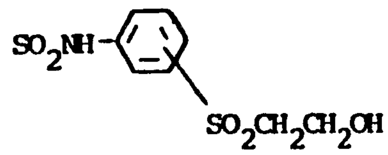 | OH-Gruppe in $T_4$ → $OSO_3H$ | 13 |
| 27 | Br | Br | " | " | " | 13 |
| 28 | Cl | Cl | 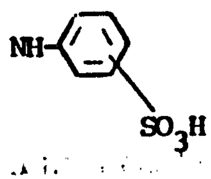 | " | " | 13 |
| 29 | " | " | 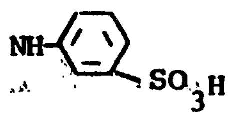 | $SO_2NHCH_2CH_2SO_2CH_2CH_2OH$ | " | 13 |
| 30 | " | " | $NHCH_2CH_2NHCOCH_2SO_3H$ | " | | |
| 31 | " | " | $NHCH_2CH_2SO_3H$ | 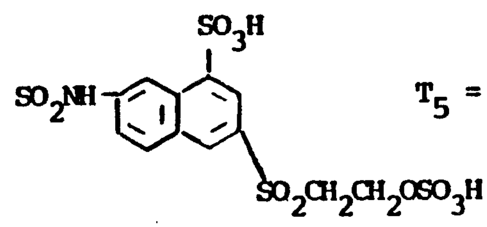 | $T_5 = T_4$ | 13 |
| 32 | " | " | $NHCH_2CH_2OSO_3H$ | " | $T_5 = T_4$ | 13 |

| Beispiel | $T_1$ | $T_2$ | $T_3$ | $T_4$ | $T_5$ | Farbkennzahl |
|---|---|---|---|---|---|---|
| 33 | Cl | Cl | $NHCH_2CH_2OSO_3H$ | 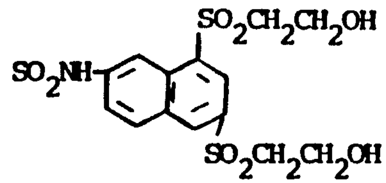 | OH-Gruppe in $T_4 \longrightarrow OSO_3H$ | 13 |
| 34 | " | " | $NHCH_2CH_2NHSO_3H$ | $SO_2CH_2CH_2OSO_3H$ | $T_5 = T_4$ | 13 |
| 35 | " | " | $NHCH_2CH_2OSO_3H$ | 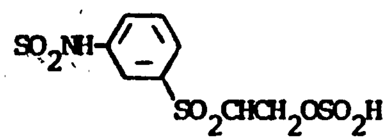 | $T_5 = T_4$ | 13 |
| 36 | " | " | $NHCH_2CH_2OSO_3H$ | 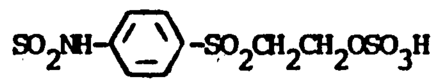 | $T_5 = T_4$ | 13 |
| 37 | " | " | $NHCH_2COOH$ | $SO_2CH_2CH_2OSO_3H$ | $T_5 = T_4$ | 13 |
| 38 | " | " | $NHCH_2CH_2CH_2CH_2SO_2NHSO_2CH_3$ | " | $T_5 = T_4$ | 13 |
| 39 | " | " | 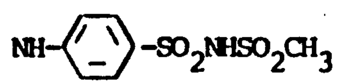 | " | $T_5 = T_4$ | 13 |

Weitere wertvolle Farbstoffe erhält man nach den Angaben der Beispiele 2a, 2b und 2c, wenn man der nachfolgend aufgeführten Dianilide einsetzt, woher die Ausgangsprodukte und Endprodukte durch die folgenden Formeln charakterisiert sind (Beispiele für Farbstoffe der Unterformeln 2 und 3, Tabelle 2)

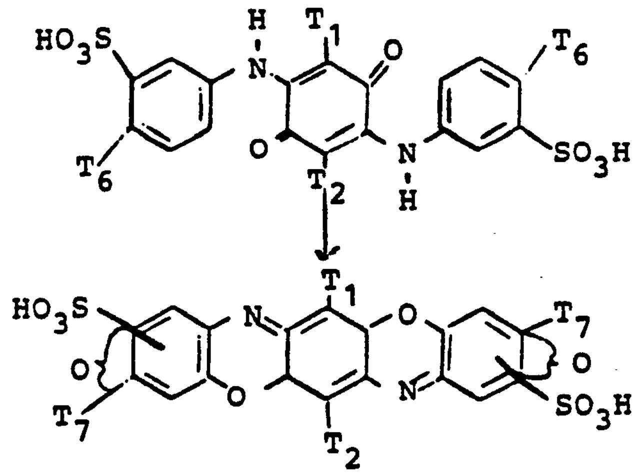

Farbkennzahl 13 = klares rotstichiges Blau
" 14 = klares Blau

Tabelle 2

| Beispiel | $T_1$ | $T_2$ | $T_6$ | $T_7$ | Farbkennzahl |
|---|---|---|---|---|---|
| 1 | Cl | Cl | 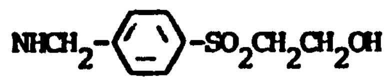 | OH-Gruppe in $T_6 \longrightarrow OSO_3H$ | 13 |
| 2 | " | " | 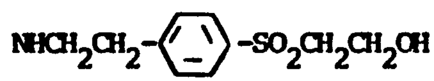 | | " |
| 3 | " | " | 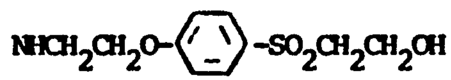 | | " |
| 4 | " | " | 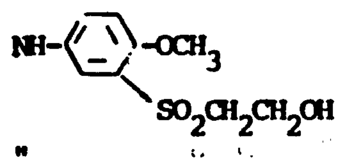 | | " |
| 5 | " | " | " | | " |
| 6 | Br | Br | 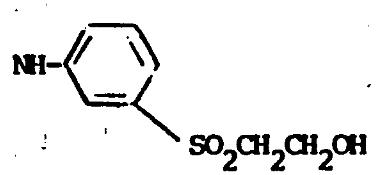 | | " |
| 7 | Cl | Cl | 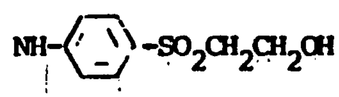 | | " |
| 8 | Br | Br | 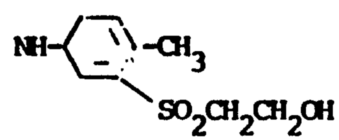 | | " |

| Beispiel | $T_1$ | $T_2$ | $T_6$ | $T_7$ | Farbkennzahl |
|---|---|---|---|---|---|
| 9 | Cl | Cl | 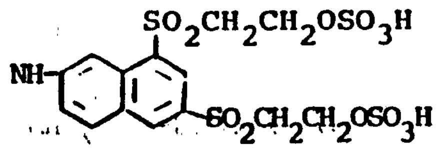 | $T_7 = T_6$ | 14 |
| 10 | " | " | 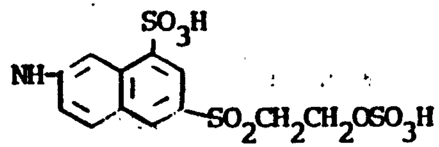 | " | 14 |
| 11 | Br | Br | 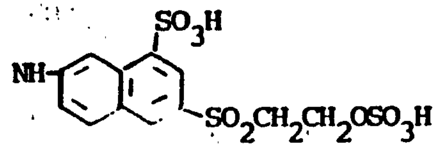 | $T_6 = T_7$ | 14 |
| 12 | $CH_3$ | $CH_3$ | 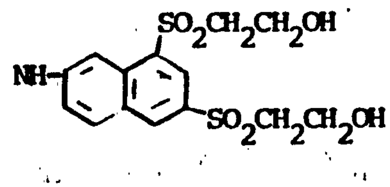 | OH-Gruppe in $T_6$ → OH | 14 |
| 13 | Cl | Cl | $NHCH_2CH_2SO_2CH_2CH_2OH$ | " | 13 |
| 14 | " | " | $NHCH_2CH_2SO_2CH_2CH_2OSO_3H$ | $T_6 = T_7$ | 13 |
| 15 | " | " | 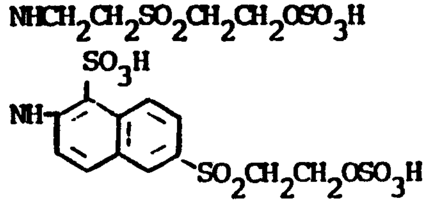 | $T_6 = T_7$ | 14 |

Weitere wertvolle Farbstoffe erhält man nach den Angaben der Beispiele 2a, 2b oder 2c, wenn man die nachfolgend aufgeführten Dianilide einsetzt, wobei die Ausgangs- und Endprodukte durch die folgende Formel charakterisiert sind (Beispiele für Unterformel 2a und 3a, Tabelle 3).

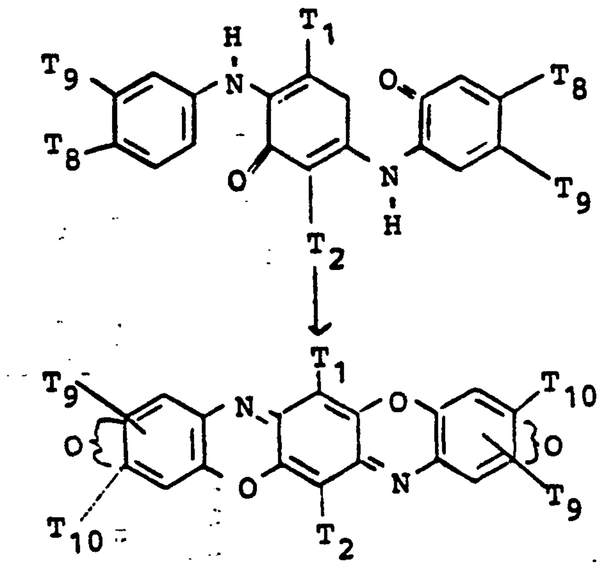

Farbkennzahl 13 = klares rotstichiges Blau
" 14 = klares Blau

Tabelle 3

| Beispiel | $T_1$ | $T_2$ | $T_8$ | $T_9$ | $T_{10}$ | Farbkennzahl |
|---|---|---|---|---|---|---|
| 1 | Cl | Cl | 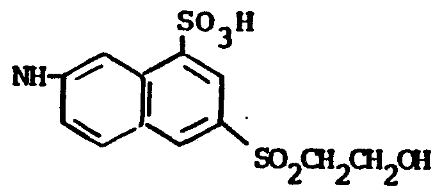 | $SO_2NHCH_2CH_2SO_3H$ | OH-Gruppe in $T_8$ → $OSO_3H$ | 14 |
| 2 | " | " | 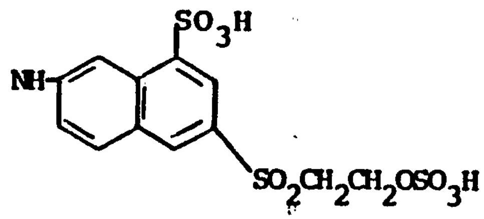 | " | $T_{10} = T_8$ | " |
| 3 | " | " | 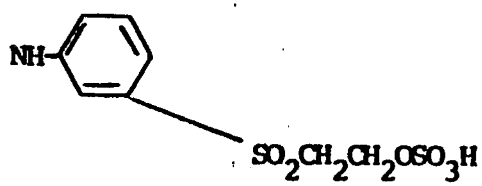 | 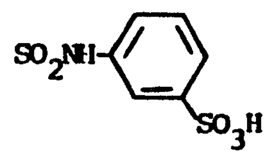 | $T_{10} = T_8$ | 13 |
| 4 | " | " | 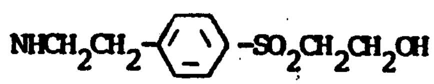 | $SO_2NHCH_2CH_2OH$ Sulfatierung durch Ringschluß in Oleum | OH-Gruppe in $T_8$ —$OSO_3H$ | 13 |

| Beispiel | $T_1$ | $T_2$ | $T_8$ | $T_9$ | $T_{10}$ | Farbkennzahl |
|---|---|---|---|---|---|---|
| 5 | Cl | Cl | 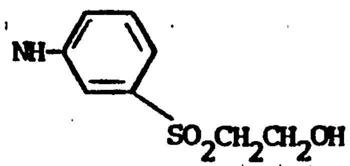 | $SO_2NHCH_2CH_2SO_3H$ | OH-Gruppe in $T_8$ —$OSO_3H$ | 13 |
| 6 | " | " | 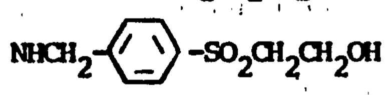 | " | | 13 |
| 7 | " | " | 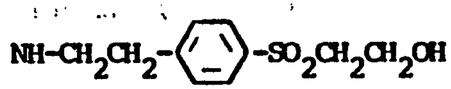 | " | | 13 |
| 8 | " | " | 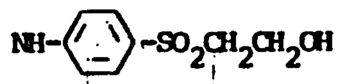 | " | | 13 |
| 9 | " | " | 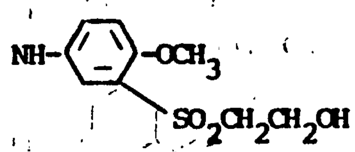 | " | | 13 |
| 10 | " | " | 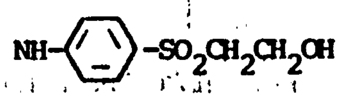 | $SO_2NHCH_2CH_2OSO_3H$ | | 13 |
| 11 | " | " | 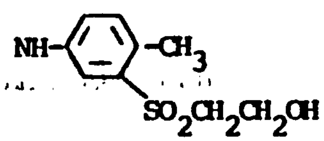 | " | | 13 |
| 12 | " | " | 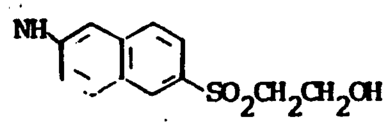 | " | | 14 |

| Beispiel | $T_1$ | $T_2$ | $T_8$ | $T_9$ | $T_{10}$ | Farbkennzahl |
|---|---|---|---|---|---|---|
| 13 | Cl | Cl | $NHCH_2CH_2SO_2CH_2CH_2OH$ | $SO_2NHCH_2CH_2SO_3H$ | OH-Gruppe in $T_8$ --> $OSO_3H$ | 13 |
| 14 | " | " | $NHCH_2CH_2SO_2CH_2CH_2OH$ | $SO_2NHCH_2CH_2OSO_3H$ | " | 13 |
| 15 | " | " | 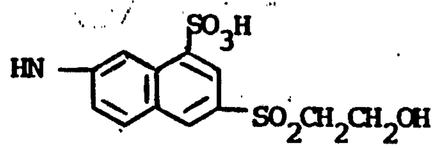 | H | " | 14 |
| 16 | " | " | 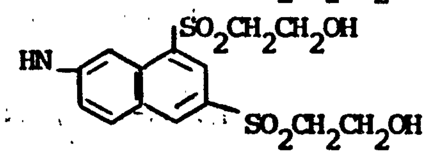 | H | " | 15 |
| 17 | " | " | 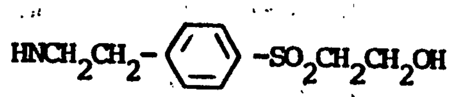 | COOH | " | 13 |
| 18 | " | " | 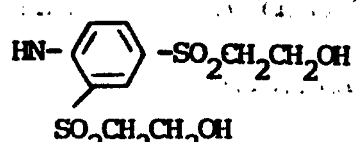 | H | " | 13 |
| 19 | " | " | 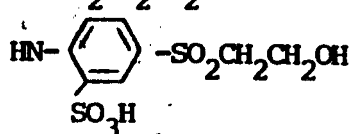 | H | " | 13 |
| 20 | " | " | 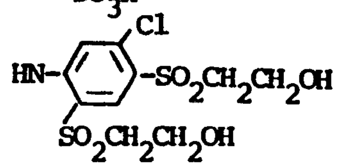 | H | " | 13 |

Weitere wertvolle Farbstoffe erhält man nach den Angaben des Beispiele 2a, 2b oder 2c, wenn man die nachfolgend aufgeführten Diarylide einsetzt, wobei die Ausgangs- und Endprodukte durch die folgende Formel charakterisiert sind (Beispiele für Farbstoffe der Unterformel 4, Tabelle 4).

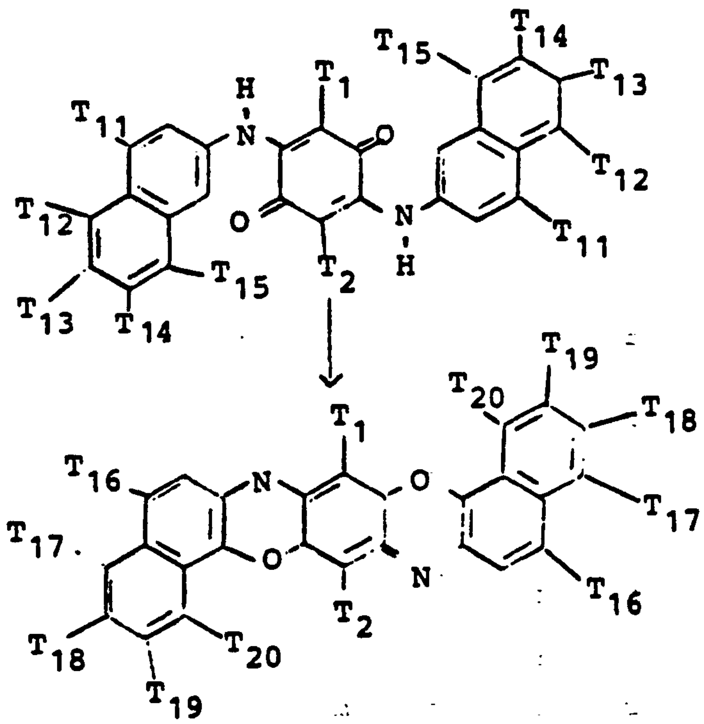

In der Tabelle steht B für $SO_2CH_2CH_2OSO_3H$ und $B_2$ für $SO_2CH_2CH_2OH$.
Farbkennzahl 13 = klares rotstichiges Blau

**Tabelle 4**

| Beispiele | $T_1$ | $T_2$ | $T_{11}$ | $T_{12}$ | $T_{13}$ | $T_{14}$ | $T_{15}$ | $T_{16}$ | $T_{17}$ | $T_{18}$ | $T_{19}$ | $T_{20}$ |
|---|---|---|---|---|---|---|---|---|---|---|---|---|
| 1 | Cl | Cl | H | H | $B_2$ | H | $SO_3H$ | H | H | B | H | $SO_3H$ |
| 2 | Cl | Cl | H | H | B | H | $SO_3H$ | H | H | B | H | $SO_3H$ |
| 3 | Cl | Cl | $B_2$ | H | $SO_3H$ | H | H | B | H | $SO_3H$ | H | H |
| 4 | Cl | Cl | $B_2$ | H | H | $SO_3H$ | H | B | H | H | $SO_3H$ | H |
| 5 | Cl | Cl | $SO_3H$ | H | $B_2$ | H | $B_2$ | $SO_3H$ | H | B | H | B |
| 6 | Br | Br | H | H | $B_2$ | H | $SO_3H$ | H | H | B | H | $SO_3H$ |

**Patentansprüche**

1. Triphendioxazinfarbstoffe der Formel

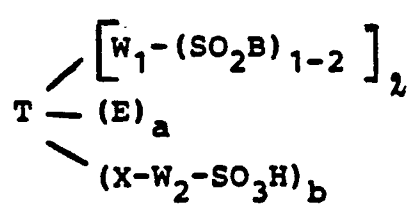

worin

T =

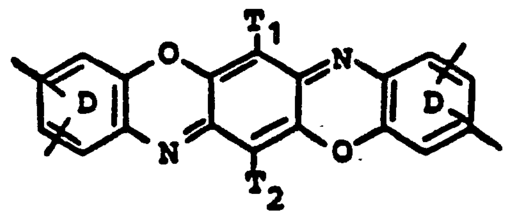

oder

T =

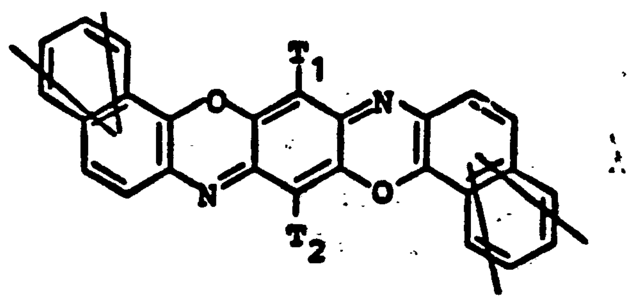

wobei

$T_1$, $T_2$ = H, Cl, Br, F, $C_1$-$C_4$-Alkoxy, $C_1$-$C_4$-Alkyl, gegebenenfalls substituiertes Phenyl oder Phenoxy,

die Benzolringe D und die Naphthalinringe noch weiter substituiert sein können,

B = $CH=CH_2$ oder $CH_2CH_2Z$

worin Z = abspaltbare Gruppe

$W_1$ = direkte Bindung oder von heterocyclischen Gruppen freies Brückenglied zu einem aromatischcarbocyclischen C-Atom in T, wobei $SO_2B$ an ein C-Atom in $W_1$ oder im Falle $W_1$ = direkte Bindung an ein aromatisch-carbocyclisches C-Atom in T gebunden ist,

X = O, NR oder S

wobei R = H oder gegebenenfalls substituiertes $C_1$-$C_4$-Alkyl,

$W_2$ = aliphatisches, araliphatisches oder aromatisch-carbocyclisches Brückenglied,

a = 0 bis 2,

b = 0 bis 2,

wobei a + b = 0 oder 2 ist, wobei für a + b = 0

$W_1$ nicht für eine direkte Bindung steht und mindestens eine wasserlöslich machende anionische Gruppe, insbesondere eine Sulfogruppe aufweist oder zwei $SO_2B$-Gruppen an $W_1$ gebunden sind

E = $SO_3H$, COOH oder gegebenenfalls substituierte Sulfonamidgruppe und worin für den Fall, daß E = $SO_3H$ und a = 2 ist, $W_1$ für $W_3$ steht, wobei

$W_3$ = -X-Y-$X_1$ 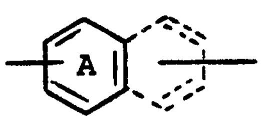

worin X die angegebene Bedeutung hat

Y = direkte Bindung, gegebenenfalls substituiertes und/oder gegebenenfalls durch Heteroatome unterbrochenes $C_1$-$C_6$-Alkylen,

$X_1$ = direkte Bindung, 0 oder NR

und der Benzol- bzw. Naphthalinring A substituiert sein kann, oder

-X-$Y_1$

ist,

worin X die angegebene Bedeutung hat und

$Y_1$ = gegebenenfalls durch Heteroatome unterbrochenes $C_2$-$C_6$-Alkylen.

2. Triphendioxazinfarbstoffe der Formel

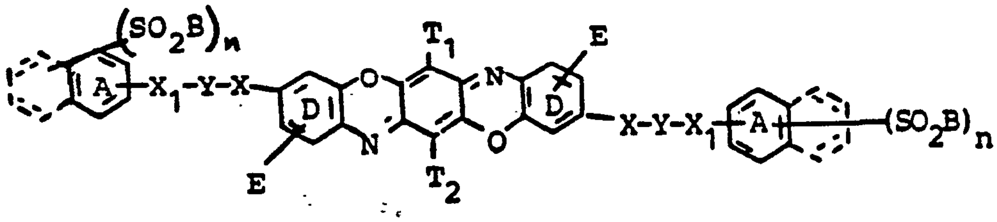

worin X, Y, $X_1$, $T_1$, $T_2$, A, B und E die in Anspruch 1 angegebene Bedeutung haben, n = 1 oder 2, und E in o-Stellung zum Substituenten -X-Y-$X_1$

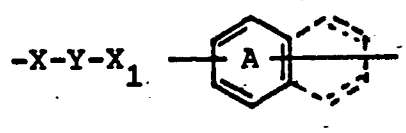

($SO_2B_n$) steht und worin der Kern D durch Cl, $CH_3$, $OCH_3$, COOH substituiert sein kann.

3. Triphendioxazinfarbstoffe der Formel

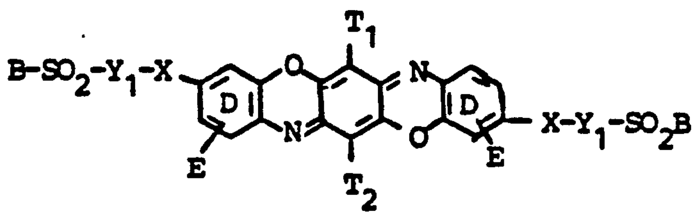

worin X, $Y_1$, $T_1$, $T_2$, E, B und D die in Anspruch 1 bzw, 2 angegebene Bedeutung haben.

4. Triphendioxazinfarbstoffe der Formel

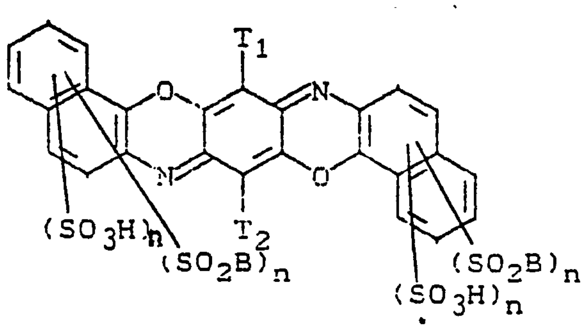

worin B, $T_1$, $T_2$ und n die in Anspruch 1 bzw. 2 angegebene Bedeutung haben.

5. Triphendioxazinfarbstoffe der Formel

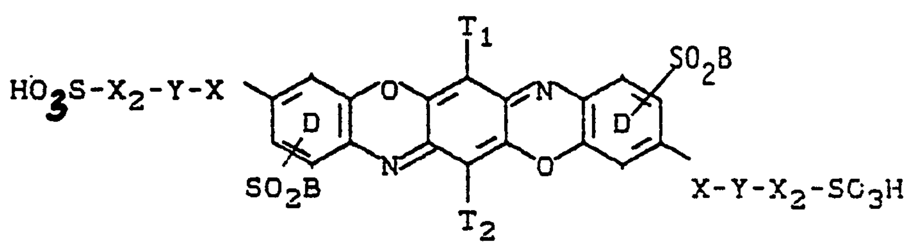

worin $T_1$, $T_2$, B, X, Y und D die in Anspruch 1 bzw. 2 angegebene Bedeutung haben

$X_2$ = direkte Bindung oder ein beispielsweise durch $SO_3H$, Cl, $OCH_3$, $CH_3$, $C_2H_5$, $NH_2$ substituierter Arylrest (vorzugsweise Phenylen) oder ein araliphatischer Rest

und die $SO_2B$-Gruppe in o-Stellung zum Substituenten -X-Y-$X_2$-$SO_3H$ steht.

6. Triphendioxazinfarbstoffe der Formel

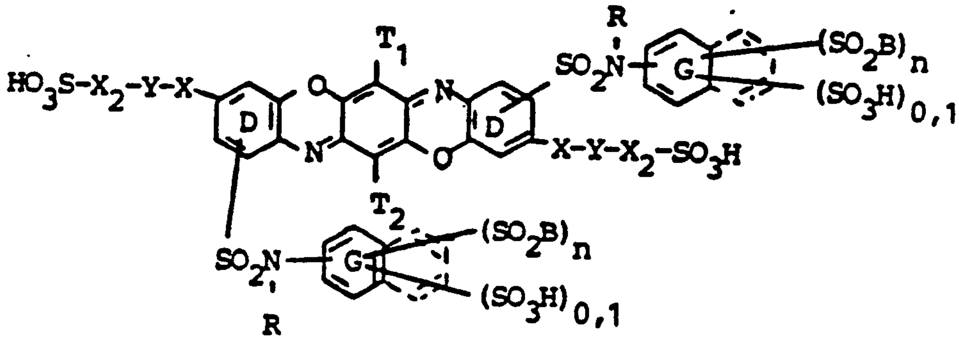

worin X, Y, $X_2$, B, R, $T_1$, $T_2$ und n die in Anspruch 1, 2 und 5 angegebene Bedeutung haben und der Benzol- bzw. Naphthalinring G durch Cl, $CH_3$, $OCH_3$, $OC_2H_5$ substituiert sein kann, und worin die Gruppe

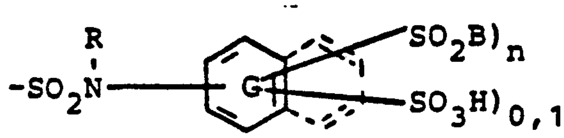

in o-Stellung zum Substituenten $-X-Y-X_2-SO_3H$ steht.

7. Triphendioxazinfarbstoffe der Formel

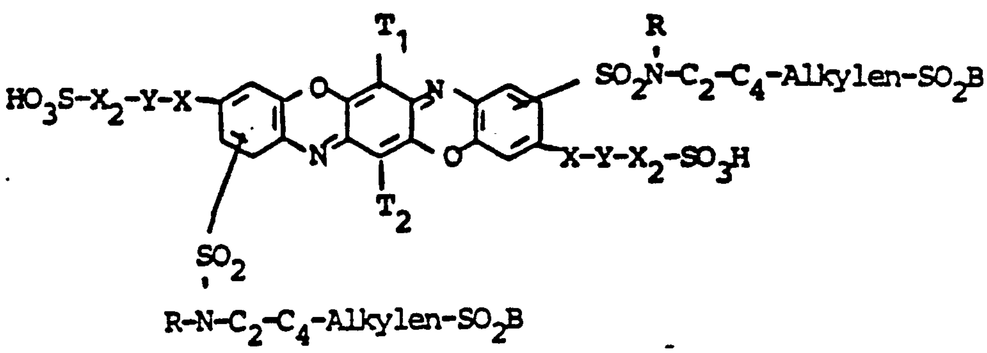

worin X, Y, $X_2$, $T_1$, $T_2$, R und B die in Anspruch 1 und 5 angegebene Bedeutung haben.

8. Triphendioxazinfarbstoffe der Ansprüche 1 bis 7,
in denen
$B = CH_2CH_2OSO_3H$
$T_1, T_2 = Cl$
und solche der Ansprüche 2, 3, 5, 6 und 7, in denen X = NH.

9. Verfahren zur Herstellung der Farbstoffe der Ansprüche 2, 3, 4, 5, 6 und 7, dadurch gekennzeichnet, daß man die Diarylide der Formel

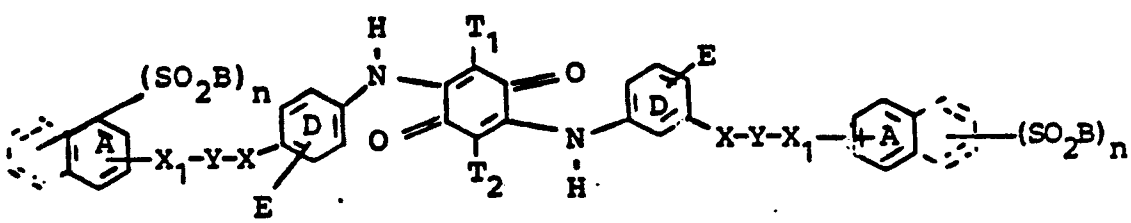

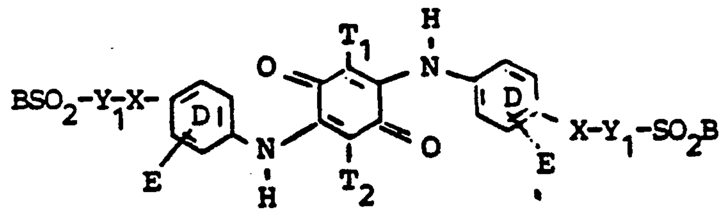

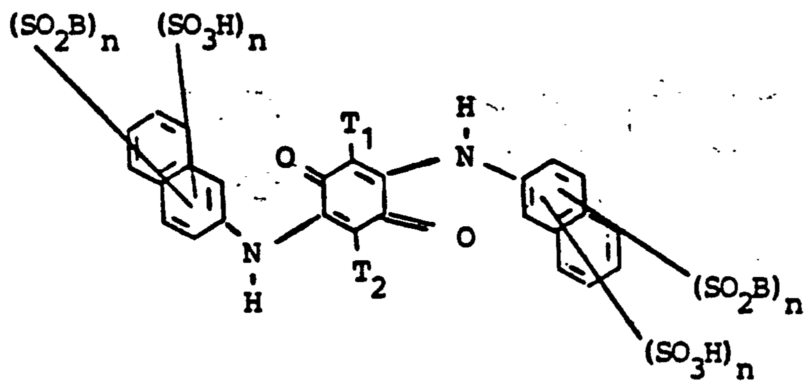

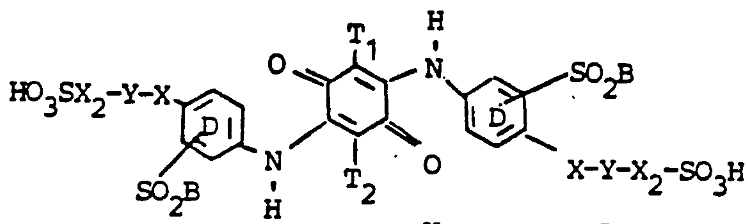

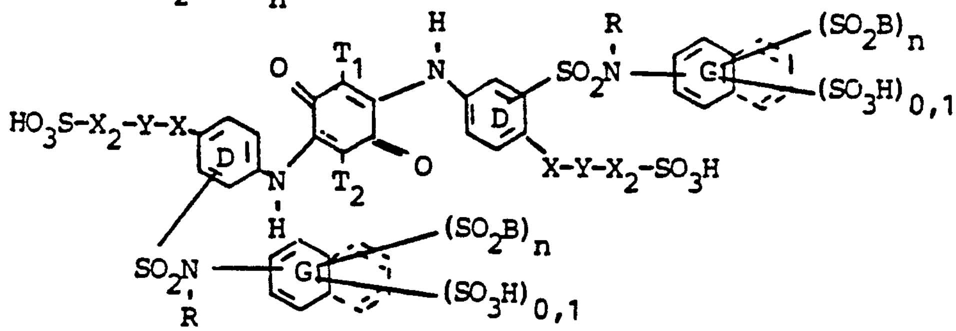

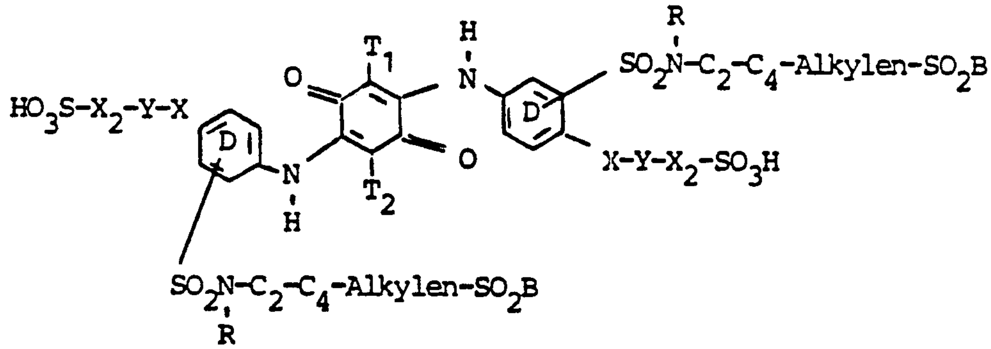

mit einem sauren Kondensationsmittel behandelt, der unter Wasserstoffabspaltung den Ringschluß zum Triphendioxazinsystem bewirkt.

10. Verfahren nach Anspruch 9, dadurch gekennzeichnet, daß man als saures Kondensationsmittel Oleum mit einem Gehalt an $SO_3$ von 10 bis 50 % verwendet und die Kondensation bei Temperaturen von 0 bis 80°C ausführt.

11. Verfahren nach Anspruch 9, dadurch gekennzeichnet, daß man den Ringschluß in 5 bis 30 %igem Oleum bei 0 bis 60°C mit molaren Mengen Persulfat ausführt.

12. Verfahren nach Anspruch 9, dadurch gekennzeichnet, daß man den Ringschluß in 10 bis 50 %igem Oleum bei 0 bis 40°C in Gegenwart von katalytischen Mengen Jod oder einer Jodverbindung ausführt.

13. Verwendung von Farbstoffen gemäß Anspruch 1 bis 8 zum Färben und/oder Bedrucken von hydroxylgruppenhaltigen oder amidgruppenhaltigen Materialien.

14. Farbstoffe der Formel

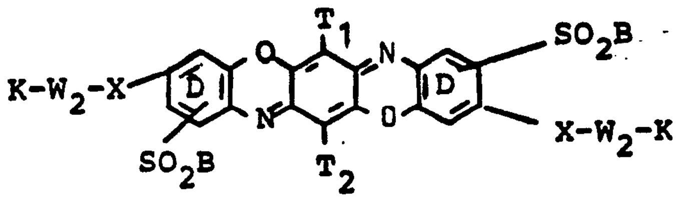

worin

K = -COOH oder $-SO_2NHSO_2R_1$ worin

$R_1$ = gegebenenfalls substituiertes Aryl oder Alkyl oder B, X, $W_2$, $T_1$ und $T_2$ die in Anspruch 1 genannte Bedeutung haben.

## Revendications

Colorants de triphendioxazine de formule:

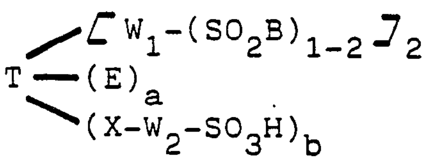

dans laquelle

T = 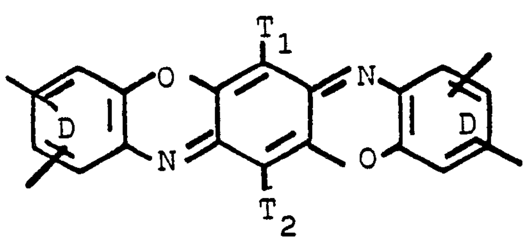

ou

T = 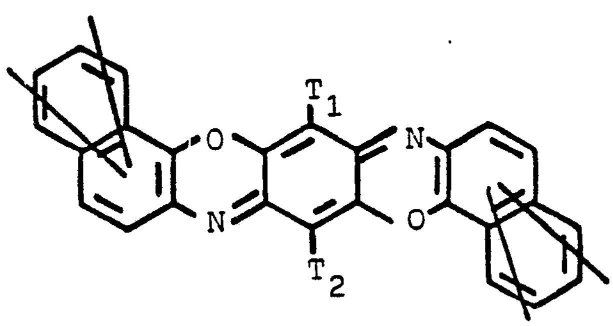

où

$T_1$, $T_2$ = H, Cl, Br, F, un groupe alcoxy en $C_1$-$C_4$, un groupe alkyle en $C_1$-$C_4$, un groupe phénoxy ou un groupe phényle éventuellement substitué,

les noyaux benzène D et les noyaux naphtalène pouvant encore être substitués davantage,

B = $CH=CH_2$ ou $CH_2CH_2Z$

où Z = groupe dissociable

$W_1$ = une liaison directe ou un pont exempt de groupes hétérocycliques, relié à un atome de carbone aromatique-carbocyclique dans T, $SO_2B$ étant relié à un atome de carbone dans $W_1$ ou, dans le cas où $W_1$ est une liaison directe, à un atome de carbone aromatique-carbocyclique dans T,

X = O, NR ou S

R représentant H ou un groupe alkyle en $C_1$-$C_4$ éventuellement substitué,

$W_2$ = pont aliphatique, araliphatique ou aromatique-carbocyclique,

a = 0 à 2,

b = 0 à 2,

a + b = 0 ou 2 et, pour a + b = 0, $W_1$ ne représente pas une liaison directe et comporte au moins un groupe anionique hydrosolubilisant, en particulier, un groupe sulfo ou deux groupes $SO_2B$ sont reliés à $W_1$,

E = $SO_3H$, COOH ou un groupe sulfonamide éventuellement substitué et, si E = $SO_3H$ et si a = 2, $W_1$ représente $W_3$,

$W_3 = -X-Y-X_1$ 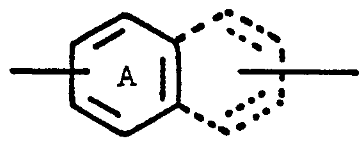

où X a la signification indiquée,

Y = une liaison directe, un groupe alkylène en $C_1$-$C_6$ éventuellement substitué et/ou éventuellement interrompu par des hétéro-atomes,

$X_1$ = liaison directe, O ou NR et le noyau benzène ou le noyau naphtalène A peut être substitué ou est $-X-Y_1$

où X a la signification indiquée, et

$Y_1$ = un groupe alkylène en $C_2$-$C_6$ éventuellement interrompu par des hétéro-atomes.

2. Colorants de triphendioxazine de formule:

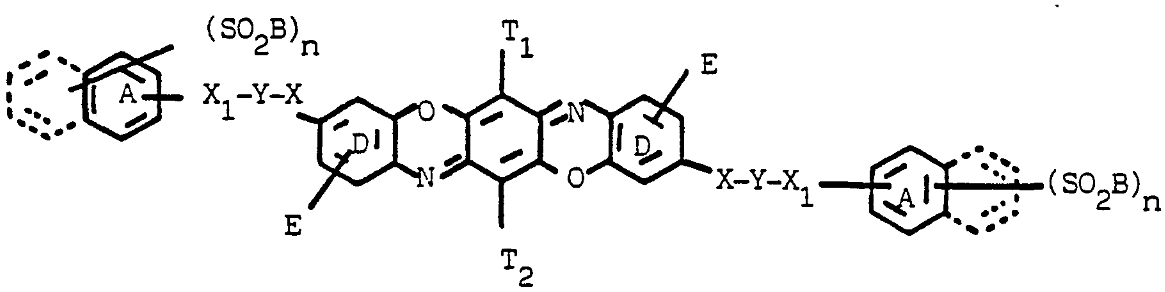

dans laquelle X, Y, $X_1$, $T_1$, $T_2$, A, B et E ont les significations indiquées dans la revendication 1, n = 1 ou 2 et E occupe la position o par rapport aux

substituants 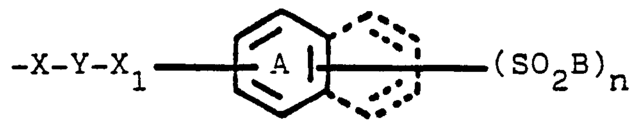 et où

$(SO_2B)_n$ et où le noyau D peut être substitué par Cl, $CH_3$, $OCH_3$ ou COOH.

3. Colorants de triphendioxazine de formule:

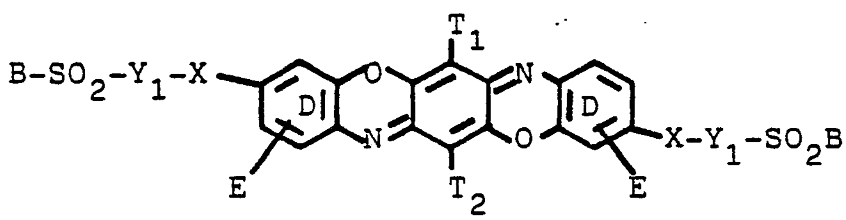

dans laquelle X, $Y_1$, $T_1$, $T_2$, E, B et D ont les significations indiquées dans la revendication 1 ou 2.

4. Colorants de triphendioxazine de formule:

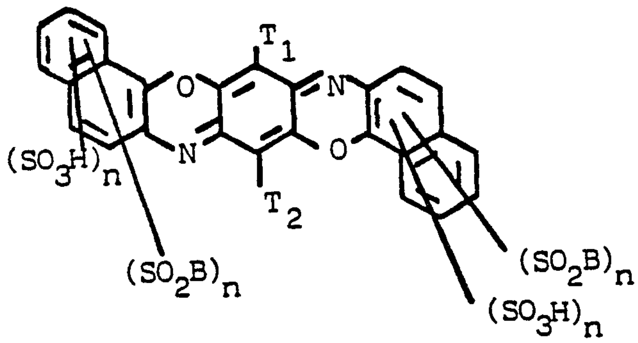

dans laquelle B, $T_1$, $T_2$ et n ont les significations indiquées dans la revendication 1 ou 2.

5. Colorants de triphendioxazine de formule.

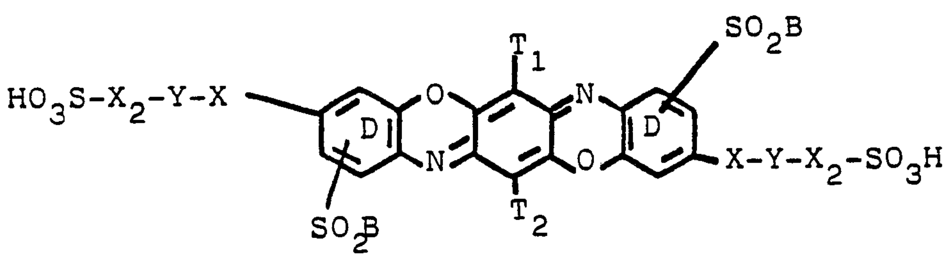

dans laquelle $T_1$, $T_2$, B, X, Y et D ont les significations indiquées dans la revendication 1 ou 2, $X_2$ = une liaison directe ou un radical aryle (de préférence, un radical phénylène) substitué, par exemple, par

$SO_3H$, Cl, $OCH_3$, $CH_3$, $C_2H_5$ ou $NH_2$,
ou encore un radical araliphatique
et le groupe $SO_2B$ est en position o par rapport aux substituants -X-Y-$X_2$-$SO_3H$.

6. Colorants de triphendioxazine de formule:

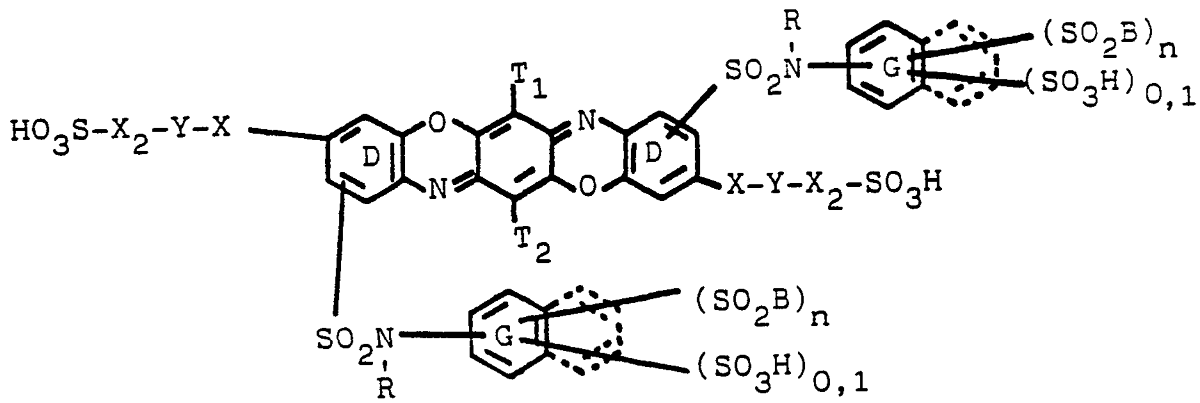

dans laquelle X, Y, $X_2$ B, R, $T_1$, $T_2$ et n ont les significations indiquées dans les revendications 1, 2 et 5, tandis que le noyau benzène ou le noyau naphtalène G peut être substitué par Cl, $CH_3$, $OCH_3$ ou $OC_2H_5$ et dans laquelle le groupe:

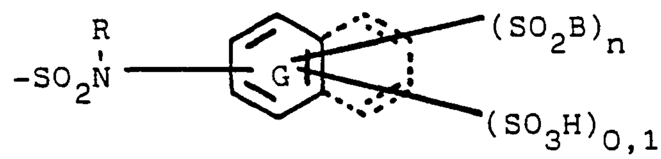

est en position o par rapport aux substituants -X-Y-$X_2$-$SO_3H$.

7. Colorants de triphendioxazine de formule:

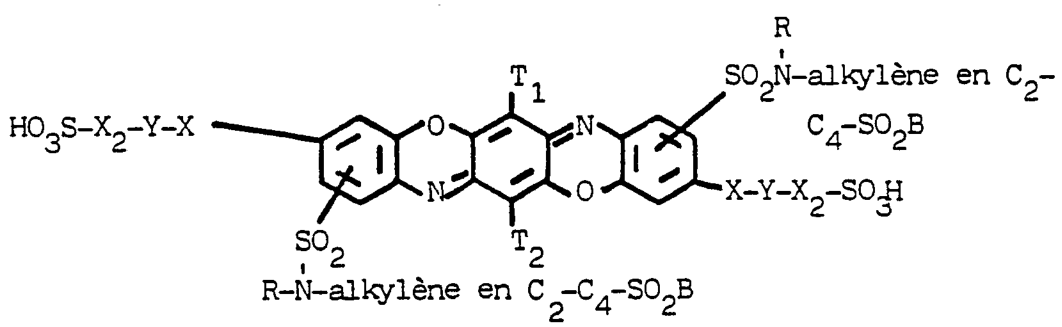

dans laquelle X, Y, $X_2$, $T_1$, $T_2$, R et B ont les significations indiquées dans les revendications 1 et 5.

8. Colorants de triphendioxazine selon les revendications 1 à 7, dans lesquels
B = $CH_2CH_2OSO_3H$
$T_1$, $T_2$ = Cl
ainsi que ceux des revendications 2, 3, 5, 6 et 7 dans lesquels
X = NH.

9. Procédé de préparation des colorants selon les revendications 2, 3, 4, 5, 6 et 7, caractérisé en ce qu'on traite les diarylides répondant aux formules:

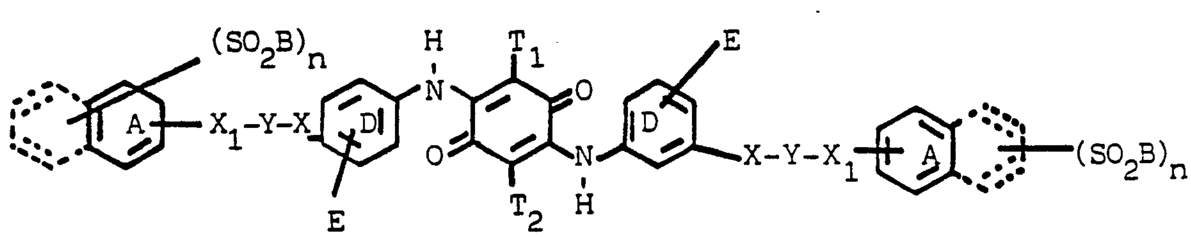

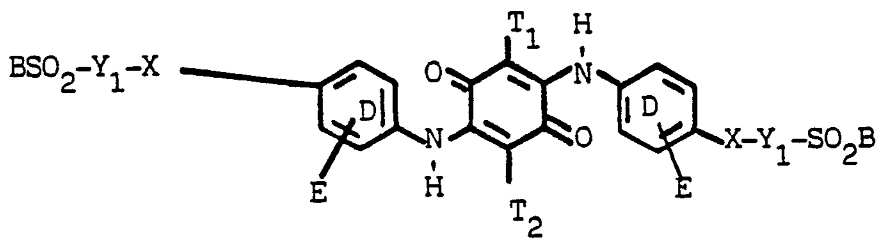

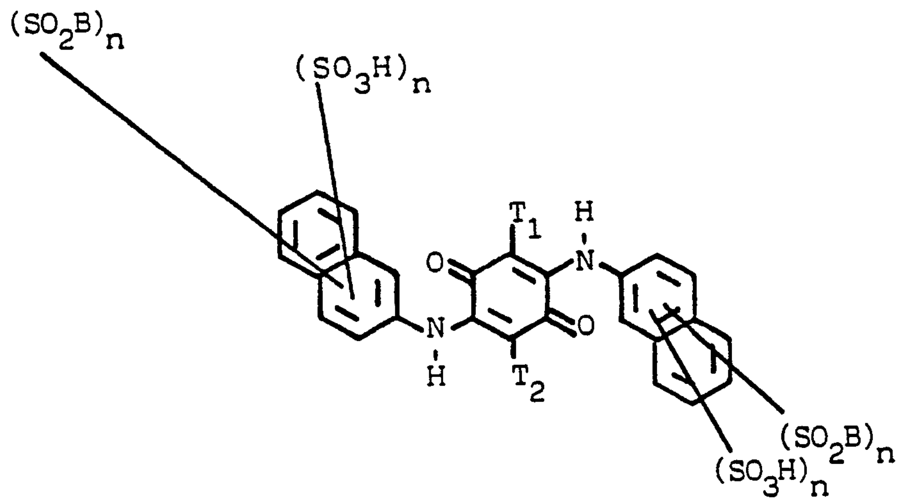

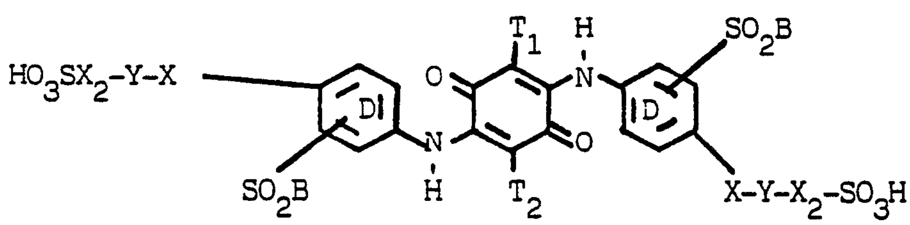

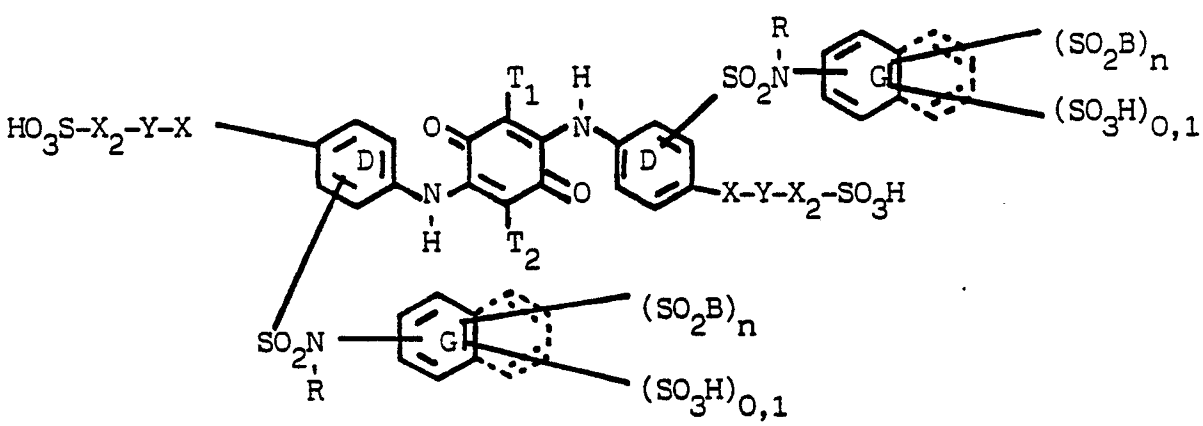

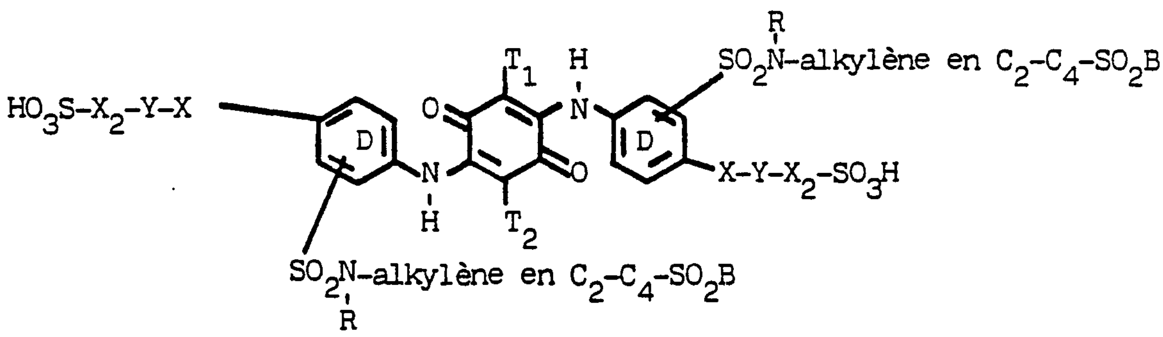

avec un agent de condensation acide qui, avec dissociation d'hydrogène, donne lieu à la cyclisation en un système triphendioxazine.

10. Procédé selon la revendication 9, caractérisé en ce que, comme agent de condensation acide, on utilise l'oléum ayant une teneur de 10 à 50% en $SO_3$, tandis que l'on effectue la condensation à des températures de 0 à 80° C.

11. Procédé selon la revendication 9, caractérisé en ce qu'on effectue la cyclisation dans de l'oléum à 5-30% à une température de 0 à 60° C avec des quantités molaires d'un persulfate.

12. Procédé selon la revendication 9, caractérisé en ce qu'on effectue la cyclisation dans de l'oléum à 10-50% à une température de 0 à 40° C en présence de quantités catalytiques d'iode ou d'un composé iodé.

13. Utilisation de colorants selon les revendications 1 à 8 pour la teinture et/ou l'impression de matières contenant des groupes hydroxyle ou des groupes amido.

14. Colorants de formule:

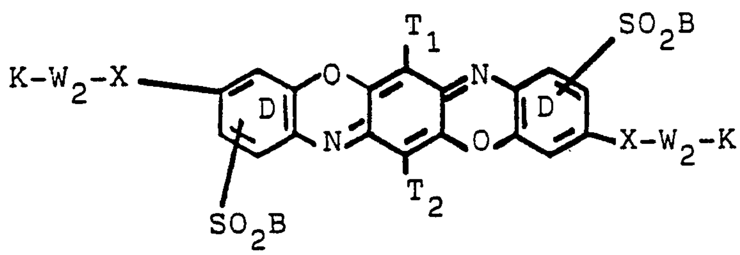

dans laquelle

K = -COOH ou $-SO_2NHSO_2R_1$ où

$R_1$ = un groupe alkyle ou un groupe aryle éventuellement substitué ou B, X, $W_2$, $T_1$ et $T_2$ ont les significations mentionnées dans la revendication 1.

**Claims**

1. Triphendioxazine dyestyffs of the formula

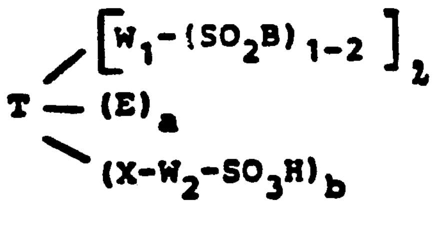

wherein

T =

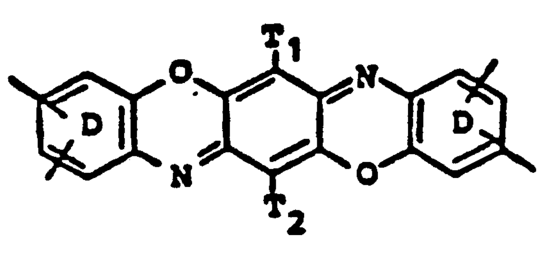

or

T =

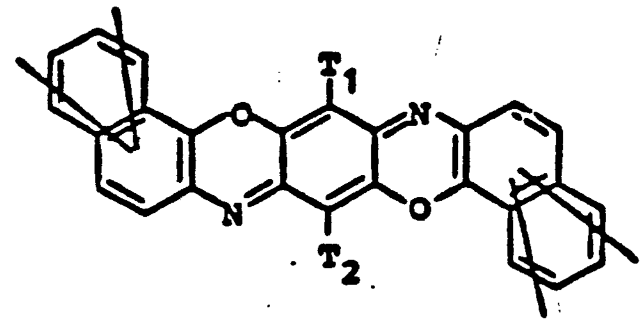

where

$T_1$ and $T_2$=H, Cl, Br, F, $C_1$-$C_4$-alkoxy, C -C,-alkyl, optionally substituted phexyl or phenoxy,

the benzene rings D and the naphthalene rings can be further subtituted,

B = $CH=CH_2$ or $CH_2CH_2CH_2Z$

wherein

Z = a detachable group

$W_1$=a direct bond or a bridge member which is free of heterocyclic groups and is bonded to an aromatically carbocyclic C atom in T, $SO_2B$ being bonded to a C atom in $W_1$ or, if $W_1$ = a direct bond, to an aromatically carbocyclic C atom in T,

X = O, NR or S

where

R = H or optionally substituted $C_1$-$C_4$-alkyl,

$W_2$ = an aliphatic araliphatic or aromatically carbocyclic bridge member,

a = 0 to 2,

b = 0 to 2, a + b being 0 or 2, wherein if a + b = 0 $W_1$ does not reprosent a direct bond and has at least one anionic group conferring water-solubility, in particular a sulpho group or two $SO_2B$ groups are bonded to $W_2$,

E=$SO_3H$, COOH or an optionally substituted sulphonamide group and wherein, if E is $SO_3H$ and a is 2, $W_1$ represents $W_3$,

$W_3$ being

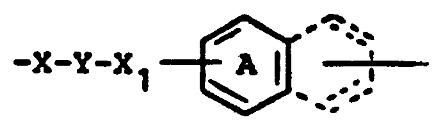

wherein

X has the abovementioned meaning,

Y = a dircct bond or $C_1$-$C_6$-alkylene which is optionally substituted and/or optionally interrupted by hetero atoms,

$X_1$ = a direct bond, O or NR,

and the benzene or naphthalene ring A can be substituted, or

-X-$Y_1$

wherein

X has the abovementioned meaning and

$Y_1$ = $C_2$-$C_6$-alkylene which is optionally interrupted by hetero atoms.

2. Triphendioxazine dyestuffs of the formula

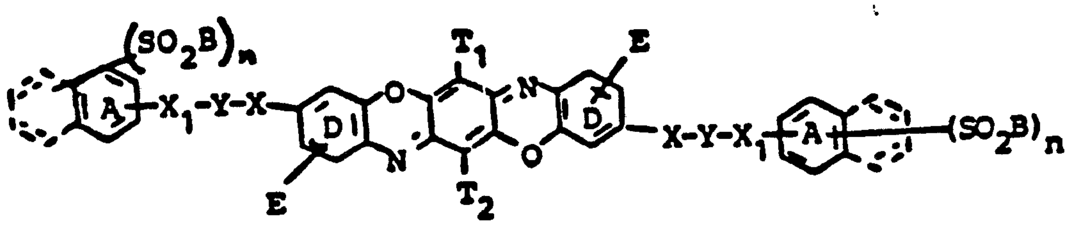

wherein

X, Y, $X_1$, $T_1$, $T_2$, A, B and E have the meaning given in Claim 1

n = 1 or 2 and

E is in the o-position relativc to the substituent -X-Y-$X_1$

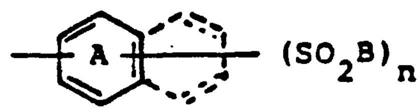

and wherein

the nucleus D can be substituted by Cl, $CH_3$, $OCH_3$ or COOH.

3. Triphendioxazine dyestuffs of the formula

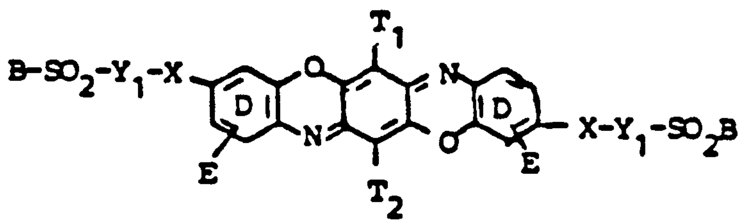

wherein

X, $Y_1$, $T_1$, $T_2$, E, B and D have the meaning given in Claim 1 and 2.

4. Triphendioxazine dyestuffs of the formula

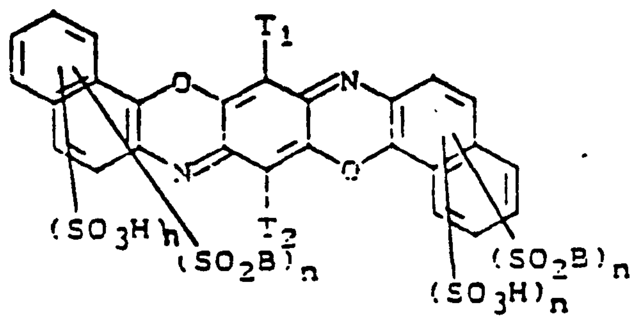

wherein

B, $T_1$, $T_2$ and n have the meaning given in Claim 1 and 2.

5. Triphendioxazine dyestuffs of the formula

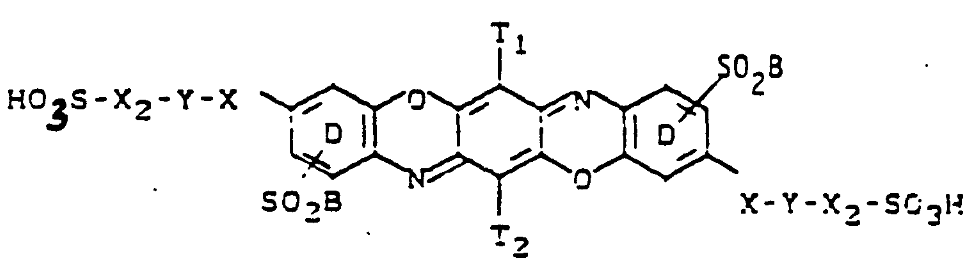

wherein

$T_1$, $T_2$, B, X, Y and D have the meaning given in Claim 1 and 2,

$X_2$ = a direct bond or an aryl radical (preferably phenylene) which is substituted for example by $SO_3H$, Cl, $OCH_3$, $CH_3$, $C_2H_5$ or $NH_2$, or an araliphatic radical

and the $SO_2B$ group is in the o-position relative to the substituent -X-Y-$X_2$-$SO_3H$.

6. Triphendioxazine dyestuffs of the formula

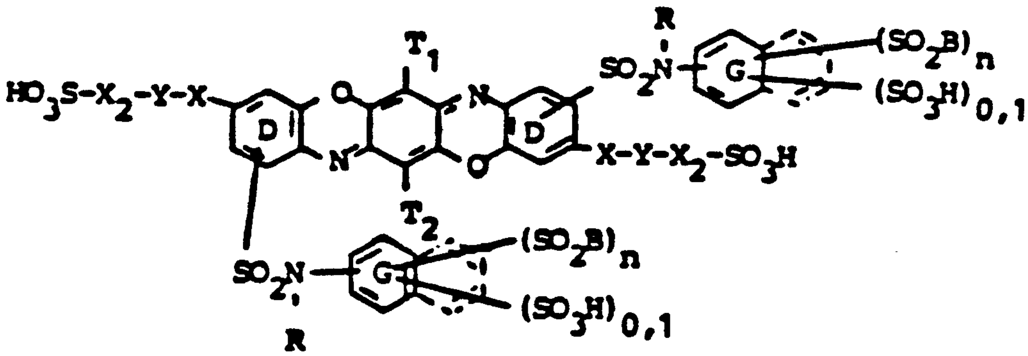

wherein

X, Y, $X_2$, B, R, $T_1$, $T_2$ and n have the meanig given in Claim 1, 2 and 5 and
the benzene or naphthalene ring G can be substituted by Cl, $CH_3$, $OCH_3$ or $OC_2H_5$
and wherein
the group

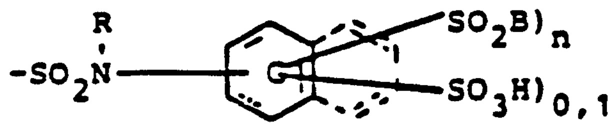

is in the o-position relative to the substituent $-X-Y-X_2-SO_3H$.

7. Triphendioxazine dyestuffs of the formula

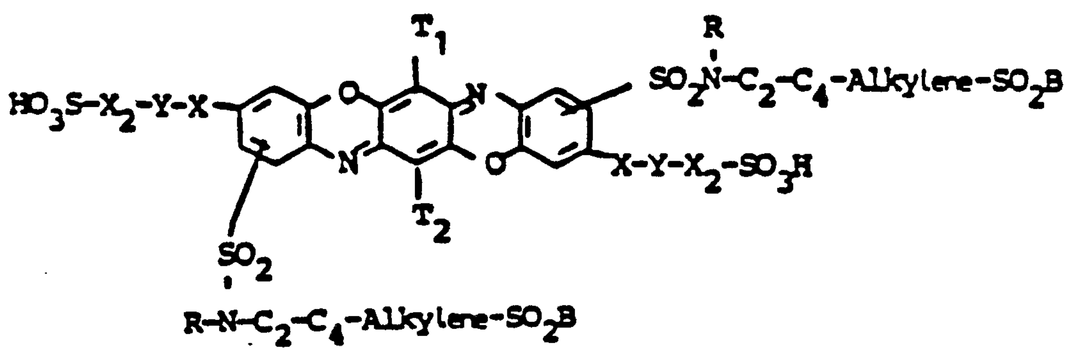

wherein

X, Y, $X_2$, $T_1$, $T_2$, R and B have the meaning given in Claim 1 and 5.

8. Triphendioxazine dyestuffs of Claims 1 to 7, in which
$B = CH_2CH_2OSO_3H$,
$T_1$ and $T_2$
and those of Claims 2, 3, 5, 6 and 7 in which
X = NH.

9. Process for preparing dyestuffs of Claims 2, 3, 4, 5, 6 and 7, characterised in that the diarylides of the formula

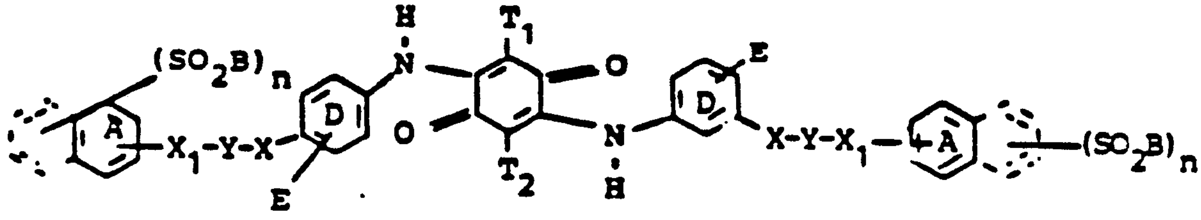

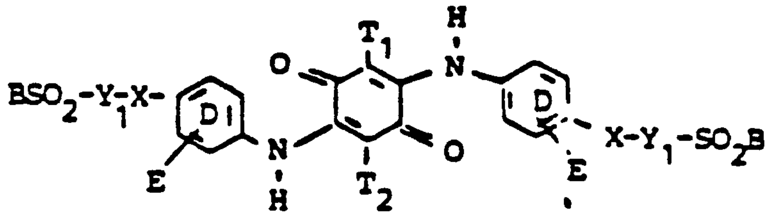

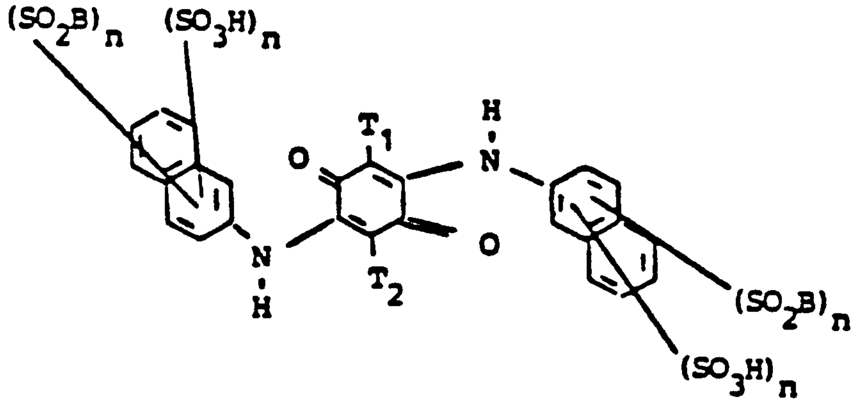

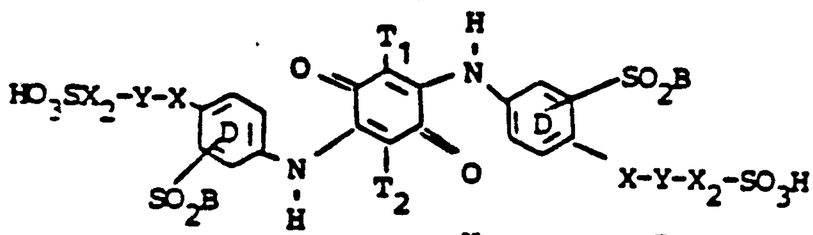

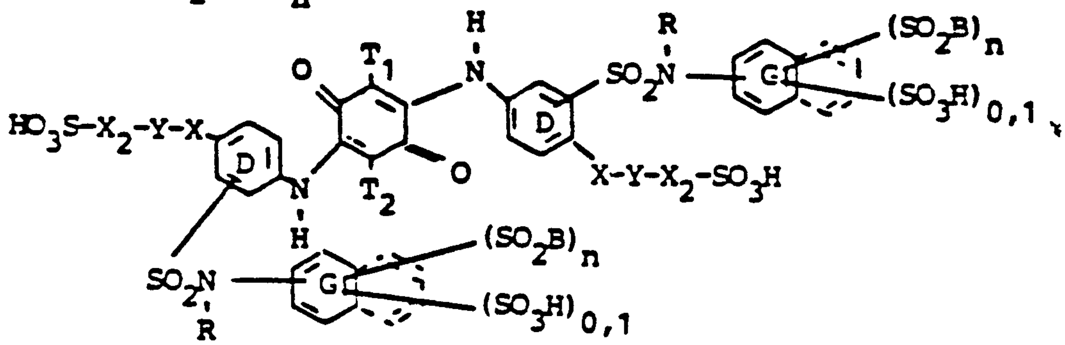

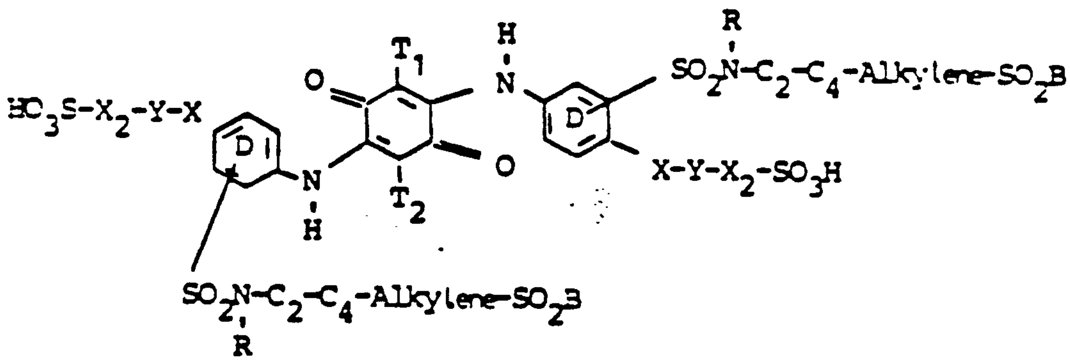

are treated with an acid condensing agent which, through the elimination of hydrogen, causes ring closure to the triphendioxazine system.

10. Process according to Claim 9, characterised in that the acid condensing agent used is oleum having an $SO_3$ content of 10 to 50%, and the condensation is carried out at temperatures of 0 to 80° C.

11. Process according to Claim 9, characterised in that the ring closure is carried out at 0 to 60° C in 5 to 30% strength oleum with molar amounts of persulphate.

12. Process according to Claim 9, characterised in that the ring closure is carried out at 0 to 40° C in 10 to 50 % strength oleum in the presence of catalytic amounts of iodine or of an iodine compound.

13. The use of dyestuffs according to Claim 1 to 8 for dyeing and/or printing hydroxyl-group-containing or amide-group-containing materials.

14. Dyestuffs of the formula

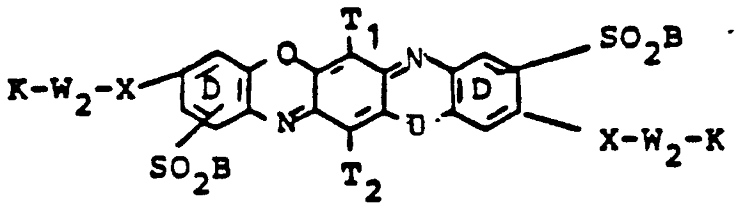

wherein K = -COOH or $-SO_2NHSO_2R_1$
wherein
$R_1$ = optionally substituted aryl or alkyl or
B, X, $W_2$, $T_1$ and $T_2$ have the meaning given in Claim 1.